# EUROPEAN PATENT SPECIFICATION

(11) **EP 4 309 311 B1**
(45) Date of publication and mention of the grant of the patent: **24.09.2025**
(21) Application number: 21713603.5
(22) Date of filing: 16.03.2021
(51) Int. Cl.: H04L 67/51, H04L 67/10, G06F 8/20, G06F 8/36, G06F 9/54

(54) **PLATFORM INDEPENDENT APPLICATION PROGRAMMING INTERFACE CONFIGURATION**
PLATTFORM-UNABHÄNGIGE ANWENDUNGSPROGRAMMIERUNG SCHNITTSTELLENKONFIGURATION
CONFIGURATION D'INTERFACE DE PROGRAMMATION D'APPLICATION INDÉPENDANTE DE LA PLATEFORME

(43) Date of publication of application: 24.01.2024
(73) Proprietor: Lenovo (Singapore) Pte. Ltd., Singapore 556741 (SG)
(72) Inventor: PATEROMICHELAKIS, Emmanouil, 81245 Munich (DE); VAISHNAVI, Ishan, 80333 München (DE); KUCHIBOTLA, Ravi, Clarendon Hills, Illinois 60514 (US)
(74) Representative: Openshaw & Co.
(86) International application number: PCT/EP2021/056731
(87) International publication number: WO 2022/194359

(56) References cited:
- WO-A1-2018/071177
- WO-A1-2021/097253
- US-A1- 2016 378 300
- US-B1- 9 094 299
- ETSI SECRETARIAT: "Final Draft GR/MEC-00315GIntegration v2.0.20 (GR MEC 031)", vol. ISG MEC Multi-access Edge Computing, no. 2.0.20, 3 August 2020 (2020-08-03), pages 1 - 47, XP014377390, Retrieved from the Internet <URL:docbox.etsi.org/ISG/MEC/05-Contributions/2020/MEC(20)000267_Final_Draft_GR_MEC-00315GIntegration_v2_0_20__GR_MEC_031_/MEC-00315GIntegrationv2020.docx> [retrieved on 20200803]

## Description

### FIELD

The subject matter disclosed herein relates generally to wireless communications and more particularly relates to configuring platform independent application programming interfaces.

### BACKGROUND

Application programming interfaces ("APIs") for a wireless communications network, such as service APIs that are exposed to vertical and slice application developers, may not be portable across different vendor and technology implementations.

### BRIEF SUMMARY

According to aspects of the present disclosure, there are provided an apparatus according to claim 1 and a method according to claim 15.

Disclosed are procedures for configuring platform independent application programming interfaces. A first method of a trusted application entity (e.g., middleware) for configuring platform independent application programming interfaces includes receiving a service parameter of at least one network service of a wireless communication system. The wireless communication system comprises one or more platforms. The first method, in some embodiments, includes determining a platform-independent application programming interface ("API") based on the service parameter for the at least one network service of the wireless communication system.

A first apparatus (e.g., a trusted application server, a middleware, or the like) for configuring platform independent application programming interfaces includes a transceiver that receives a service parameter of at least one network service of a wireless communication system. The wireless communication system may include one or more platforms. In further embodiments, the first apparatus includes a processor that determines a platform-independent application programming interface ("API") based on the service parameter for the at least one network service of the wireless communication system.

### BRIEF DESCRIPTION OF THE DRAWINGS

A more particular description of the embodiments briefly described above will be rendered by reference to specific embodiments that are illustrated in the appended drawings.
Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for configuring platform independent application programming interfaces;
Figure 2 is a diagram illustrating one embodiment of a procedure for a network architecture and signaling flow for configuring platform independent application programming interfaces;
Figure 3 is a diagram illustrating signaling flow for one embodiment of a procedure for configuring platform independent application programming interfaces for network slices;
Figure 4 is a diagram illustrating signaling flow for one embodiment of a procedure for configuring platform independent application programming interfaces for portability;
Figure 5 is a diagram illustrating signaling flow for one embodiment of a procedure for configuring platform independent application programming interfaces for O-RAN;
Figure 6 is a diagram illustrating one embodiment of a user equipment apparatus that may be used for configuring platform independent application programming interfaces;
Figure 7 is a diagram illustrating one embodiment of a network equipment apparatus that may be used for configuring platform independent application programming interfaces; and
Figure 8 is a flowchart diagram illustrating one embodiment of a method that may be used for configuring platform independent application programming interfaces.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for configuring platform independent application programming interfaces. Disclosed herein is the configuration and provisioning of the mapping of new type of application programming interface ("API") (e.g., a platform independent API, a network slice API, and/or a portability API, described below) to the platform dependent implementations of management or control plane APIs.

As background, in 3GPP SA6, an application support layer has been specified for vertical applications, known as vertical application enabler layer (V2X enabler server at TS 23.286, FF enabler server at TR 23.745, UAS enable server at TR 23.755) which acts as a middleware for exposing northbound APIs to verticals as well as to provide some server-client support functionalities for the connected devices. Also, 3GPP SA6 has provided a common for all verticals enabler layer known as SEAL (TS 23.434).

Also, in 3GPP SA6, a Service Enabler Architecture Layer ("SEAL") has been defined as a common services platform for providing support functionalities (e.g., Network Resource Management, Location Management, Configuration Management, Group Management, and/or the like) for all verticals. SEAL (TS 23.434) has introduced a new service, namely Network Slice Enabler, which has a server and client application counterpart. NSE layer provides a network slice adaptation/migration capability for all devices running an application. this requires interaction between the OAM and NSE server as well as the NSE server and the NSE client at the device side (for applying the slice adaptation).

Also, 3GPP SA6 is specifying a Common API Framework ("CAPIF") was developed to enable a unified Northbound API framework across 3GPP network functions, and to ensure that there is a single and harmonized approach for API development (TS 23.222). Some key functionalities in CAPIF are:
- CAPIF Core Function ("CCF") is a repository of all, PLMN and 3rd party, service APIs;
- API Exposing Function ("AEF") is the provider of the services as APIs;
- API Invoker is typically the applications that require service from the service providers;

Furthermore, as used herein, O-RAN is an alliance which investigates the virtualization of access domain and considers the virtualization of control functionalities ("RRC"/"RRM") to a newly defined RAN Intelligent Controller ("RIC") which may co-located with the gNB or can be deployed for a cluster of gNBs. In this context, given the deployment and the functional requirements (real-time, non-real time, near real-time) as well as the slice isolation policies, the RRM/RRC functionalities can be either flexibly located either at the CU/DU or to dedicated RIC controllers, e.g., Near-RT RIC and Non-RT RIC.

Below are some terms and definitions as they are used herein:
- non-RT RIC: a logical function that enables non-real-time control and optimization of RAN elements and resources, artificial intelligence/machine learning workflow including model training and updates, and policy-based guidance of applications/features in Near-RT RIC.
- near-RT RIC and framework functions: a logical function that enables near-real-time control and optimization of RAN elements and resources via fine-grained (e.g., UE basis, Cell basis) data collection and actions over E2 interface. Near-RT RIC comprises near-RT RIC basic/framework functions which can be for example subscription management, conflict mitigation, E2 termination ("E2T"), management services etc.
- Management Services ("MnS"): Management Services of RIC platform includes the Life-Cycle Management ("LCM") of xApp and FCAPS Management of Near-RT RIC. These services can be either provided by the near-RT RIC to the xApp (via Open API) or from SMO (Non-RT RIC) to xApps (via O1).
- xApp: An application designed to run on the Near-RT RIC. Such an application is likely to consist of one or more microservices and at the point of on-boarding will identify which data it consumes and which data it provides. The application is independent of the Near-RT RIC and may be provided by any third party. The E2 enables a direct association between the xApp and the RAN functionality.
- E2: Interface connecting the Near-RT RIC and one or more O-CU-CPs, one or more O-CU-UPs, and one or more O-DUs.
- E2 Node: a logical node terminating E2 interface.
- E2SM: The description of the Services exposed by a specific RAN function within an E2 node over the E2 interface towards the Near-RT RIC.
- E2AP: E2 Application Protocol ("E2AP") supports the functions of E2 interface by signaling procedures defined in the present document.
- Open API / O-RAN API: Open API is under definition in Near-RT RIC and is the interface between the framework functions and xAPPs.
- API Enablement: The API enablement services enable the RIC platform to provide support for the O-RAN APIs (O-RAN APIs can be defined as the open APIs within the O-RAN scope), which may be provided by either the RIC framework or the xApp(s) in a service-based manner. In particular, the API enablement services include: Repository / Registry services for the O-RAN APIs, Services that allow discovery of the registered O-RAN APIs, Services to authenticate xApps for use of the O-RAN APIs, Services that enable generic subscription and event notification. The API enablement services may be accessed via an xApp "enablement" API by the xApp(s), for supporting the API discovery, providing authentication and generic subscription & event notification.

Service APIs exposed to vertical and slice application developers should be portable across vendor and technology implementations. This can be achieved by a uniform standardized API that all vendor or technology implementation can be mapped to. This mapping from a vendor-dependent to a vendor-independent portable API would need to be configured depending on various factors, primarily, the authorization to use the vendor-dependent interface of the particular vertical. The high-level problem to be solved by this disclosure is how to configure the service APIs to be consumed by the vertical/slice customers.

The new platform independent APIs simplify the dynamic interactions between applications of the vertical customer and the underlying telecom ("telco") infrastructure (e.g., control and management domains). This allows uniform interactions between the customer and the telecom infrastructure across vendor and tech domains, and enables ease of portability of applications across multi-vendor networks, multiple instances of the telecom networks and across different technology platforms (e.g., if app #A moves from EDN #1 which connects to Network A, to EDN#2 which connects to Network B, with this solution the middleware handles all relocation aspects, and the impact on the Service API will be minimal).

As used herein, a wireless communication system includes one or more network units and remote units and one or more platforms. A network unit may be a network element, a radio access network, a core network, a network control function, a user plane function, a network management function, a mobile edge computing function, an application enablement function, or a combination thereof. In some embodiments, the network units (or any abstraction of them) may be virtualized in one or more cloud platforms. A cloud platform may be an edge or regional or core cloud platform.

As an example use case involving API configurations across vendors/multi-vendor systems, considering the fact that the 5G system ("5GS") may be multi-vendor (with multiple control and management planes which can be virtualized in different cloud platforms), and the APIs will be offered by different 5GS termination points, it is of key importance to simplify the API provisioning to the vertical customer by providing APIs in a standard manner. For example, a vertical customer may have simultaneous use of telco-provided services (e.g., such as control plane and management plane services) offered by multiple networks or services provided by different vendors' systems within the same operator network (e.g., E2E management system from Vendor A, radio access network ("RAN") management system from Vendor B, Core Network CP Vendor C, Core Network UP Vendor D). When the vertical customer interacts with such multi-vendor system via APIs, this may require that the vertical customers' applications be aware of the API offering and network domains information. This may add complexity. In order to simplify the interaction between the customer and the telco provider, it is recommended to hide this complexity from the customer, e.g., by enabling an abstraction layer which deals with the mapping of the requirements to control points inside the network.

In a second example use case involving application portability across cloud platforms, e.g., application server relocation or application client mobility, some applications of the vertical customer may be deployed or migrated to different cloud platforms (e.g., for a vehicle to everything ("V2X") scenario, some applications of Automaker X may be relocated at an Edge Cloud connected to CN-U A while other applications are deployed at the regional cloud connected to CN-U B). This will require that for consuming management and control services, APIs need to be configured towards applications of the same vertical in a different way. This may include the API information (e.g., termination points), as well as the API protocols (e.g., to ensure meeting the latency requirements). This may pose complexity especially when multi-vendor scenarios are involved.

An example use case for open RAN ("O-RAN"), but not limited to O-RAN, comprises the introduction of a Portability SDK to support the exposure of services from a cloud platform to the applications, which are hosted in this platform. Such applications could be, for example, mobile edge computing ("MEC") applications in MEC systems, or xApps in O-RAN architecture. The need for such software development kit ("SDK") is to allow the portability of applications between platforms without relying on platform-dependent parameters and programming languages. Such SDK can be seen as a platform-independent SDK that comprises a simplified API on top of the platform provided APIs (e.g., C APIs from RAN intelligent controller ("RIC") platform are translated to simplified Python APIs).

The configuration of the mapping of the portability SDK to service APIs and the configuration of the simplified APIs based on the platform-provided APIs, is one challenge to be solved in this use case, since there are multiple factors that need to be considered. These factors can be 1) the permissions that the end application has, 2) the security aspects (e.g., network topology hiding from a third party), 3) the dynamic requirements for new/modified services that need to be exposed, and 4) the status/availability of the APIs, some control is needed at the platform for how to configure or adapt the mapping (the mapping may not be static).

In this case, two cloud platforms, cloud platform #1 and cloud platform #2, could belong to the same vendor and are naturally the same technology domain. However, in case the cloud platforms are under different management entities the xAPP/MEC app would need to update the location at which it accesses the management services to use a new instance for cloud platform #2. This is complex as it also requires the context for the xApp/MEC app to be moved across the management systems and a way for the xApp/MEC app to know that it now needs to use the new instance of management services/APIs.

In a third example use case involving network slice enablement, network slicing is one key 5G feature that introduces logical end-to-end sub-networks corresponding to different verticals. Network slicing allows the deployment of multiple logical networks known as network slice instances ("NSI") offering 3rd parties and verticals customized communication services ("CS") on the top of a shared infrastructure. Based on a physical network that might be operated by a public operator or an enterprise, 5G provides the means to run multiple slices for different communication purposes. 5G allows slices to run independently and if desired, isolated from each other. A network slice instance, which can be defined as private or public slice based on the scenario, may consist of a RAN part and a core network ("CN") part. A sub-part of a network slice instance is called a network slice subnet instance ("NSSI"), which may then contain further NSSIs. The application so far has no possibility in the current telecom network to change, or provision new or replace managed entities that they use. An application may use any one of the following managed entities: CS, NSI, NSSI, Network functions or other resources in the telecom networks such as virtualized network function ("VNF"s) or physical entities such as physical network functions ("PNF"s).

One key aspect in network slice instance configuration and provisioning is the exposure of capabilities to the slice customer/vertical/tenant:
- related to the control plane for a particular slice or a session within a slice (via service capability exposure function ("SCEF")/network exposure function ("NEF")). This could be for instance network slice analytics from network data analytics function ("NWDAF"), or traffic steering/quality of service ("QoS") influence by the application for a user within a slice.
- related to the management plane for a particular slice(s) or slice subnets (e.g., RAN, CN). This for instance could be related to NSI/NSSI modification or monitoring by the customer based on the system level simulator ("SLS").

The aforementioned exposure capabilities, which can be slice-specific or slice-aware, require the use of APIs between the 5GS and the applications deployed by the network slice customer. For control plane interactions this is performed via NEF/SCEF northbound APIs; whereas for management service exposure this is performed via MEF/exposure governance management function ("EGMF") APIs.

Certain challenges may exist for the slicing use case, the control and management related services may have strong coupling since the slice management affects the control plane and vice versa; where at the same time the slice customer may have dynamic/on-demand requests which affect both control and management plane. A customer, if it has permission, may want to influence decisions related to control or management plane. In the slicing case, an input for deciding to request a network adaptation may be triggered by an event that comes for the management system. This may need to be considered when configuring the APIs related to slice capability exposure.
- Example 1: RAN NSSI high load/resource unavailability may affect the per user equipment ("UE") slice parameters. The slice customer may require the control plane adaptation (e.g., resource adaptation, traffic steering, app to slice re-mapping) based on a management plane event.
- Example 2: A group UE mobility may affect the slice radio resource management ("RRM") policies for one or more cell areas (as configured by the operation administration and maintenance ("OAM"); however, without considering the UE behavior).

The slice customer may not want to understand the specific mobile network operator ("MNO")-provisioned network parameters (related to service to be exposed), but requires an output which is understandable (e.g., an alert from MNO, an instruction for more resources/more user plane functions ("UPF"s)). At the same time, the MNO may want to hide the network topology while providing the required information to the slice customer. One case is when an application changes the behavior, e.g., change of automation level for the service, change of inter-vehicle distance in a platoon, change of speed). Another case is to request for a control or management plane action to ensure meeting these requirements. This may involve selection of other public land mobile network ("PLMN") or radio access technology ("RAT") to deal with an expected downgrade. Also, the vertical may just want an alert which is not necessarily network/QoS downgrade, but an event for which the vertical has subscribed (e.g., alert when location of a drone deviates if location services are used, alert when QoS/quality of experience ("QoE") upgrade is available in a certain area).

Different slices in these use cases may be available in all provided frequencies or a subset of them (e.g., FR1 or FR2 only) based on MNO and application service provider ("ASP") agreement (and network capabilities to support a slice requirement). As an example, a mobile network operator has provisioned a set of network slices (Slice#1, Slice#2, Slice#3), which may be used by different ASPs (e.g., Slice#1 for online video services, Slice#2 for gaming, Slice#3 for enhanced mobile broadband ("eMBB") or internet of things ("IOT") service). Different ASPs may use these slices (or a subset of them) for different services that they offer. Furthermore, when an application changes the network slices to be accessed, it should be independent to the UEs accessing the service and should be performed automatically. To allow for such ASP-provided changes, the slice capability exposure is required for influencing control plane (for requesting session-related adaptations, e.g., data network name ("DNN") remapping, slice re-mapping) and management plane (adaptation of NSI/NSSI parameters like RRM policies or coverage). This will be done via APIs from both control and management plane (however in an uncoordinated manner). In this example, the vertical application needs to know which entity offers which APIs and what are the protocol requirements for the API consumption.

For all these use cases (e.g., multi-vendor support, portability, slicing), there is a common issue, which is how to configure the exposure of services via APIs in a way that is 1) independent to the underlying telco infrastructure, 2) hides the complexity of the telco infrastructure, 3) doesn't impact/restrict the level of exposure to the vertical, and 4) that is resilient to dynamic changes that may happen due to application portability or telco-provided API status changes. Therefore, the problem to be solved is how to configure the APIs for exposing cloud platform/telco provided capabilities (slice specific, control, and management) to the applications of the vertical customer (which may be deployed centrally or distributed over different clouds) to deal with the aforementioned issue.

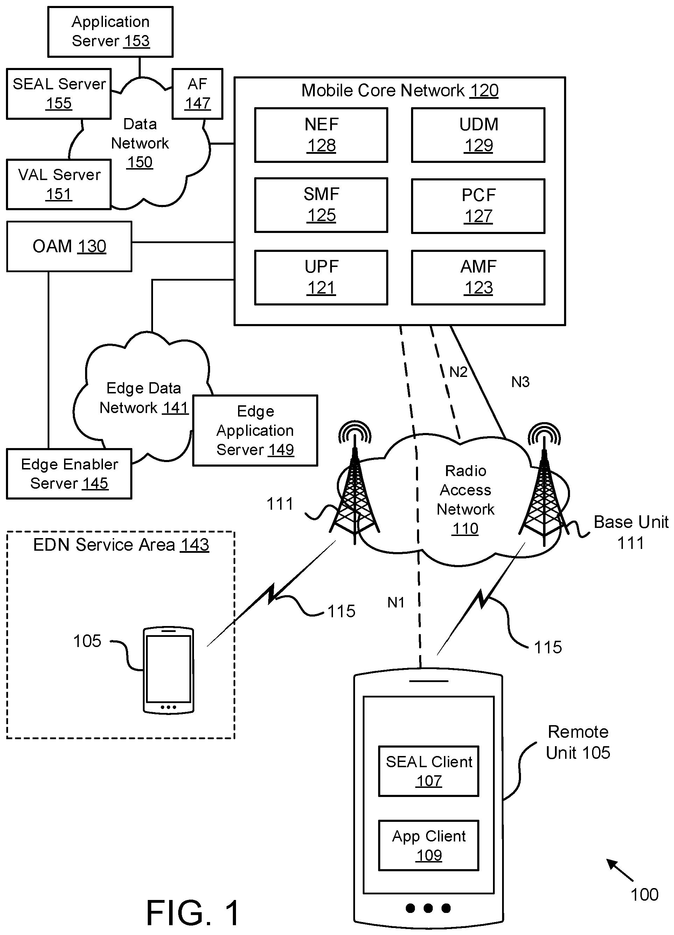

Figure 1 depicts a wireless communication system 100 for configuring platform independent application programming interfaces, according to embodiments of the disclosure. In various embodiments, the wireless communication system 100 includes at least one remote unit 105, a radio access network ("RAN") 110, and a mobile core network 120. The RAN 110 and the mobile core network 120 form a mobile communication network. The RAN 110 may be composed of a base unit 111 with which the remote unit 105 communicates using wireless communication links 115. Even though a specific number of remote units 105, base units 111, wireless communication links 115, RANs 110, and mobile core networks 120 are depicted in Figures 1A-1C, one of skill in the art will recognize that any number of remote units 105, base units 111, wireless communication links 115, RANs 110, and mobile core networks 120 may be included in the wireless communication system 100.

In one implementation, the RAN 110 is compliant with the 5G system specified in the 3GPP specifications. In another implementation, the RAN 110 is compliant with the LTE system specified in the 3GPP specifications. More generally, however, the wireless communication system 100 may implement some other open or proprietary communication network, for example WiMAX, among other networks. The present disclosure is not intended to be limited to the implementation of any particular wireless communication system architecture or protocol.

In Figure 1, the wireless communication system 100 supports an edge computing service deployment including at least one edge data network ("EDN") 141 supporting an EDN service area 143. The EDN 141 includes at least one Edge Application Server ("EAS") 177 supporting an instance of an application. When a remote unit 105 is located in the EDN service area 143, Edge Application client 179 is able to access the EAS 177. However, when the remote unit 105 is outside any EDN service area, the EA client 179 is able to access an instance of the application using the Application server 171 located in the data network 150 (i.e., a regional data network). The EDN 141 also includes an edge enabler server ("EES") 173, a middleware application enabler server, while the remote unit 105 includes an edge enabler client ("EEC") 175. In other embodiments, the wireless communication system may support a future factories ("FF") vertical and/or a V2X vertical (not depicted).

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art.

The remote units 105 may communicate directly with one or more of the base units 111 in the RAN 110 via uplink ("UL") and downlink ("DL") communication signals. Furthermore, the UL and DL communication signals may be carried over the wireless communication links 115. Here, the RAN 110 is an intermediate network that provides the remote units 105 with access to the mobile core network 120. As depicted, the remote unit 105 may include hardware and software resources to run a SEAL client 107 and/or a mobile application client 109.

In some embodiments, the remote units 105 communicate with a communication host (e.g., edge application server 149 and/or application server 153) via a network connection with the mobile core network 120. For example, a mobile application (e.g., web browser, media client, telephone/VoIP application, mobile application client 109) in the remote unit 105 may trigger the remote unit 105 to establish a PDU session (or other data connection) with the mobile core network 120 via the RAN 110. The mobile core network 120 then relays traffic between the remote unit 105 and the communication host (i.e., application server) using the PDU session. Note that the remote unit 105 may establish one or more PDU sessions (or other data connections) with the mobile core network 120. As such, the remote unit 105 may concurrently have at least one PDU session for communicating with one application server and at least one additional PDU session for communicating with another application server (not shown).

The base units 111 may be distributed over a geographic region. In certain embodiments, a base unit 111 may also be referred to as an access terminal, an access point, a base, a base station, a Node-B, an eNB, a gNB, a Home Node-B, a relay node, or by any other terminology used in the art. The base units 111 are generally part of a radio access network ("RAN"), such as the RAN 110, that may include one or more controllers communicably coupled to one or more corresponding base units 111. These and other elements of radio access network are not illustrated but are well known generally by those having ordinary skill in the art. The base units 111 connect to the mobile core network 120 via the RAN 110.

The base units 111 may serve a number of remote units 105 within a serving area, for example, a cell or a cell sector, via a wireless communication link 115. The base units 111 may communicate directly with one or more of the remote units 105 via communication signals. Generally, the base units 111 transmit DL communication signals to serve the remote units 105 in the time, frequency, and/or spatial domain. Furthermore, the DL communication signals may be carried over the wireless communication links 115. The wireless communication links 115 may be any suitable carrier in licensed or unlicensed radio spectrum. The wireless communication links 115 facilitate communication between one or more of the remote units 105 and/or one or more of the base units 111.

In one embodiment, the mobile core network 120 is a 5G core ("5GC") or the evolved packet core ("EPC"), which may be coupled to a packet data network 150, like the Internet and private data networks, among other data networks. A remote unit 105 may have a subscription or other account with the mobile core network 120. Each mobile core network 120 belongs to a single public land mobile network ("PLMN"). The present disclosure is not intended to be limited to the implementation of any particular wireless communication system architecture or protocol.

The mobile core network 120 includes several network functions ("NFs"). As depicted, the mobile core network 120 includes multiple user plane functions ("UPFs") 121. The mobile core network 120 also includes multiple control plane functions including, but not limited to, an Access and Mobility Management Function ("AMF") 123 that serves the RAN 110, a Session Management Function ("SMF") 125, a Policy Control Function ("PCF") 127, a Network Exposure Function ("NEF") 128, and a Unified Data Management function ("UDM") 129. In certain embodiments, the mobile core network 120 may also include an Authentication Server Function ("AUSF"), a Network Repository Function ("NRF") (used by the various NFs to discover and communicate with each other over APIs), or other NFs defined for the 5GC. In some embodiments, the UDM 129 is co-located with a User Data Repository ("UDR").

In various embodiments, the mobile core network 120 includes sever network services (not shown) that are produced by a network unit. The network unit may include a control plane service produced by a network function, a network management service produced by a management function, a mobile edge computing service produced by a network function, an application enablement service produced by an application enabler function, a RIC service produced by an O-RAN unit, and/or the like.

In various embodiments, the mobile core network 120 supports different types of mobile data connections and different types of network slices, wherein each mobile data connection utilizes a specific network slice. Here, a "network slice" refers to a portion of the mobile core network 120 optimized for a certain traffic type or communication service. A network slice instance may be identified by a S-NSSAI, while a set of network slices for which the remote unit 105 is authorized to use is identified by NSSAI. In certain embodiments, the various network slices may include separate instances of network functions, such as the SMF 125 and UPF 121. In some embodiments, the different network slices may share some common network functions, such as the AMF 123. The different network slices are not shown in Figure 1 for ease of illustration, but their support is assumed.

The wireless communication system 100 includes an OAM / Management function 130. The OAM / Management function 130 may provide slice parameters (e.g., slice capabilities, slice policies, slice availability information, vertical to slice subscriptions and permissions, slice key performance indicators, slice service level agreements ("SLA"), and/or the like) to the enabler servers (e.g., EES 145). In various embodiments, the OAM / Management function 130 performs slice instantiation, e.g., in response to a request from a service provider.

As depicted, the data network 150 may include a VAL server 151, an application server 153 and/or a SEAL server 155. In 3GPP, an application support layer has been specified for vertical applications, known as vertical application enabler layer. Examples of vertical application enablers include the V2X enabler server, the FF enabler server, and the UAS enable server. The vertical application enabler layer may act as a distributed or centralized middleware, which may reside at the MNO or the 3rd party/vertical service provider's domain, for exposing northbound APIs to verticals as well as to provide some server-client support functionalities for the connected devices.

The Service Enabler Architecture Layer ("SEAL") provides an enabler layer common for all verticals. SEAL comprises server functionalities (e.g., Network Resource Management, Location Management, Configuration Management, Group Management, Identity Management, Key Management, Network Slice Enablement, and/or the like) as well as client functionalities at the end devices. SEAL also comprises AF functionality when interacting with 5G Core Network. The VAL server 151 is one embodiment of an enabler server or an application specific server, which consumes the services which are provided by the SEAL server functionalities. In some embodiments, the SEAL server 155 and/or enabler server reside at either the Data Network 150 or the Edge Data Network 141. In further embodiments, the SEAL server 155 and enabler server is co-located.

Also, there are two models: on-network and off-network models. In on-network model, the SEAL client 107 communicates with the SEAL server 155 over the SEAL-UU reference point, whereas for off-network the identity management client of the UE1 communicates with the SEAL client 107 of the UE2 over the SEAL-PC5 reference point.

Although specific numbers and types of network functions are depicted in Figure 1, one of skill in the art will recognize that any number and type of network functions may be included in the mobile core network 120. Moreover, where the mobile core network 120 is an EPC, the depicted network functions may be replaced with appropriate EPC entities, such as an MME, S-GW, P-GW, HSS, and the like. In certain embodiments, the mobile core network 120 may include a AAA server.

While Figure 1 depicts components of a 5G RAN and a 5G core network, the described solutions apply to other types of communication networks and RATs, including IEEE 802.11 variants, GSM, GPRS, UMTS, LTE variants, CDMA 2000, Bluetooth, ZigBee, Sigfoxx, and the like. For example, in an LTE variant involving an EPC, the AMF 123 may be mapped to an MME, the SMF mapped to a control plane portion of a PGW and/or to an MME, the UPF map to an SGW and a user plane portion of the PGW, the UDM/UDR maps to an HSS, etc.

In the following descriptions, the term eNB/ gNB is used for the base station but it is replaceable by any other radio access node, e.g., BS, eNB, gNB, AP, NR, etc. Further the operations are described mainly in the context of 5G NR. However, the proposed solutions/methods are also equally applicable to other mobile communication systems supporting middleware-assisted slice and/or DNN re-mapping for vertical applications and/or edge network deployments.

Described herein is a mechanism (e.g., at an application enabler/middleware function which may reside at the third party/service provider (SP) domain or the MNO or a cloud platform provider) for configuring platform independent application programming interfaces. The new platform independent APIs simplify the dynamic interactions between applications of the vertical customer and the underlying telecom ("telco") infrastructure (e.g., control and management domains). This allows uniform interactions between the customer and the telecom infrastructure across vendor and tech domains and enables ease of portability of applications across multi-vendor networks, multiple instances of the telecom networks and across different technology platforms.

The binding - simplification of APIs to SDKs which can be platform-independent or slice-customized on top of the telco-provided APIs, requires some form of configuration from an abstraction layer. Such configuration may be the mapping of service APIs to SDKs based on the service/ slice exposure level, as well as the configuration of the simplified / translated APIs which are to be published to the customers' applications.

Such configuration could be initially provided, e.g., when an SLA/SLS is provided by the telco infrastructure provider or this could be dynamically updated. One reason for such dynamic updates can be events related to API status/availability. Other reasons could be the dynamic adaptation of the service exposure requirements for a particular area or time or service type. Further, such adaptation of configuration may be the result of an application client or application server relocation to different platforms (hence the APIs provided by the telco/cloud provider will need to change).

The subject matter herein, in one embodiment, solves this issue by providing an abstraction layer for configuring the mapping of service APIs to slice/vertical-customized APIs, to enable the application-friendly telco services exposure (which can be provided by multiple domains and vendors). In certain implementations, this disclosure proposes a method at a trusted application or network entity that is configured to determine the "slice API" mapping to the provided exposed services. Slice APIs, as used herein, are defined as customized sets of service APIs, which can be either control or management or third-party provided APIs and can be mapped to particular slice instances. The slice APIs can be a bundled or combined API comprising of different types of APIs, which will be used to expose the control and management services as needed by the slice customer.

In further implementations, the proposed solution determines the mapping between platform dependent APIs based on the service exposure requirements, to platform independent simplified APIs, so as to allow application portability across cloud platforms without relying on underlying protocol knowledge.

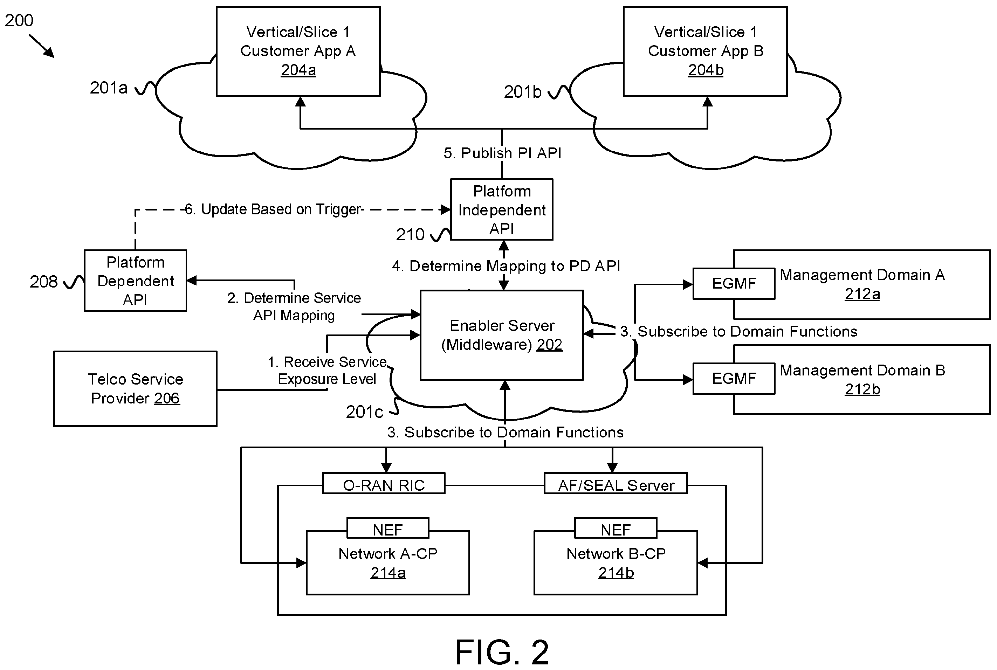

Figure 2 depicts a network architecture 200 and signaling flow for managing the configuration of platform independent application programming interfaces, according to embodiments of the disclosure. In one embodiment, at step 1, a middleware/enabler server 202 (e.g., a network slice enabler, middleware, application function, network function, management function, or the like), at an edge/regional/core network/platform 201c, receives a service parameter that may include a service exposure level, a service accessibility indication, a service availability indication, a list based on the authorization of the application 204a-b, and/or the like from the telco service provider 206, which may be the M&O domain, as well as the SLA/SLS for an application/service type. In certain embodiments, this may be related to a network slice. In this case, the telco service provider 206 is the slice provider, and this step includes an application-to-slice mapping based on the vertical application subscriptions, a slice to service exposure mapping from slice provider, or the like. The input for configuring slice APIs is the SLS provided by the Management system or GST/NEST provided by GSMA and/or the application to slice mapping as provided by the application/NSE/network.

In one embodiment, at step 2, the middleware/enabler server 202 determines the mapping of service APIs to an SDK/API based on the service exposure requirement. The resulting SDK/API may be a slice or vertical customized SDK/API. This may also include the configuration of platform dependent APIs 208, and can comprise the API names, URIs, API versions, protocol information, termination points per API, API types included, communication methods (e.g., request-response or subscribe-notify), time validity, and/or the like.

In one embodiment, this may be determined based on matching the service exposure level (e.g., CP function #a and access permissions for Service #x) and the slice exposure parameters (e.g., CP function #a provided by NEF#1 for slice #1 with certain access policies, and by NEF#2 for slice #2 with other access policies) and enclosing the API / protocol / transport information (as well as SDK tools) for accessing the service APIs from the service API producers.

In certain embodiments, the determination of the mapping requires the knowledge of availability of the platform dependent APIs. The availability of the platform dependent APIs can be maintained via receiving periodic heartbeat/keep-alive messages from the API producers or by interacting with the API registry (e.g., CCF, API enablement) for checking the availability.

Below is shown an example determination for the mapping between slice/vertical customized API and platform dependent APIs which are bundled together. Here also implementation details could be determined:

| Slice/Vertical customized SDK/API | Platform dependent SDK APIs / Slice APIs | API provider details | Implementation details |
|---|---|---|---|
| Slice #1 | Control API #x | NEF #x | Per API to store: |
| | | | - Data encoding (e.g., JSON, protobuf, ASN.1) |
| | Management API #y | MnS #y | |
| | SEAL API #z | SEAL server #z | |
| | O-RAN API #w | RIC function (e.g., conflict mitigation function #1) | - transport technology (e.g. TCP, gRPC, REST, Kafka) |
| | MEC API #a | RNIS #a | |
| | | | - API protocol (e.g., OpenAPI, proto) |
| Slice #2 | | | |
| Slice #N | | | |

In one embodiment, at step 3, the middleware/enabler server 202 subscribes or registers with the involved domain functions, e.g., management domains 212a-b that interact with the middleware 202 via an EGMF, control plane domains 214a-b of one or more networks that interact with the middleware 202 via a NEF, MEC, other servers e.g., SEAL, and/or the like, which produce the platform-dependent APIs based on the service/slice exposure requirements. This step will allow the middleware 202 to be capable of invoking these APIs on behalf of the application 204a-b, which may be a vertical/slice customer that has deployed applications in different cloud platforms 201a-b (e.g., regional, edge cloud).

In one embodiment, at step 4, the middleware/enabler server 202 determines platform independent SDK APIs 210, and their mapping to the platform dependent SDK/APIs 208 (of step 2). In this step, the underlying telco protocol and transport aspects will be decoupled from the platform independent API 210 to be exposed to the end applications 204a-b, hence allowing a uniform exposure of services across different platforms. Also, middleware 202 may act as repository/registry for the platform independent APIs 210, their mapping with the slice/vertical customized APIs and their configurations and the mapping to constituent platform dependent APIs 208 (e.g., management, control, application-provided). An example can be shown below:

| Slice/Vertical SDK/API | Platform dependent SDK APIs | Platform independent APIs |
|---|---|---|
| Slice #1 | Control API #x | Service API #1 (e.g., QoS API) |
| | Management API #y | |
| | SEAL API #z | Service API #2 (e.g., Location API) |
| | O-RAN API #w | Service API #3 (e.g., Traffic Steering Opt. API) |
| | MEC API #a | Service API #4 (Predictive QoE API) |
| Slice #2 | Control API #y | .. |
| Slice #N | Management API #z | ... |

In one embodiment, at step 5, the middleware/enabler server 202 creates and publishes the platform independent APIs 210 to be exposed to the vertical/end applications 204a-b. This may also include programming tools, libraries, and/or the like.

In one embodiment, at step 6, based on trigger events (e.g., UE mobility, application server relocation to different platform, unavailability of telco provided APIs, API overload indication, and/or the like), the middleware 202 will monitor and adapt the platform dependent SDK/APIs 208 (of step 2) and their mapping to platform independent SDK APIs 210 (determined in step 4), in order to ensure the continuity/availability of platform independent SDK APIs 210 in dynamically changing environments.

In step 6, one further implementation of a trigger event can be the platform-dependent API 208 high load, which can be checked, e.g., via an API load control/monitoring function at the platform, or via a Retry-After operation in HTTP/REST. Such trigger event will allow the middleware 202 to execute self-API throttling / rate limiting at the platform dependent APIs 208, in order to ensure that the platform independent APIs 210 are not impacted (e.g., by a possible overload/ rejection).

An example from vehicular vertical industry may be illustrative. The Automaker X needs certain services from 5GS and has an agreement with MNO x to consume these services for a set of V2X applications (e.g., Advanced Driving, Platooning, etc.) in the entire PLMN. The telco services may include Management Services, Control Services, SEAL services, MEC services, and/or the like. To expose these services to the Automaker X and meet the requirements, the MNO/SDK provider forms an SDK/API bundle, e.g., a platform dependent SDK 208 with all the information required. The formed SDK/API may be formed at a cloud platform and includes all the protocol and communication information for reaching these services; however, it may not be optimal to send all this information to the Automaker X. Also, Automaker X may run services in different regions where different telco infrastructure (and software) is used for providing these services.

So, the middleware 202 (at MNO or SDK provider or cloud provider domain) needs to form an additional platform independent SDK 210 for publishing it to the Automaker X (e.g., a Predictive QoS API) without requiring the knowledge of the underlying protocols and infrastructure. When the platform dependent SDK/API 208 needs to change, e.g., due to unavailability of APIs, mobility of UEs (across different MEC platforms), application relocations, or the like, then the platform independent SDK 210 needs to be kept intact (e.g., a predictive QoS API needs to be provided, no matter whether NWDAF x or NEF y provides the services). So, this solution not only configures the mapping of service APIs to slice/vertical tailored APIs based on the vertical's needs, but also performs a simplification of these APIs, so as to allow the portability with minimum awareness at the end applications 204a-b.

As an example for UE mobility across platforms, MEC provided APIs (e.g., radio network information service ("RNIS")) will change API producer and possibly other aspects (e.g., API protocol, communication, etc.). Also, different MEC services may be used in different MEC platforms. In that case, the platform independent SDK 210 stays the same, but the platform dependent APIs 208 will change. In certain embodiments, a repository, e.g., a database, a data store, or the like, at an UE, a network device, and/or the like may be used to store the determined platform-independent APIs 210 and the mapping to platform-dependent APIs 208.

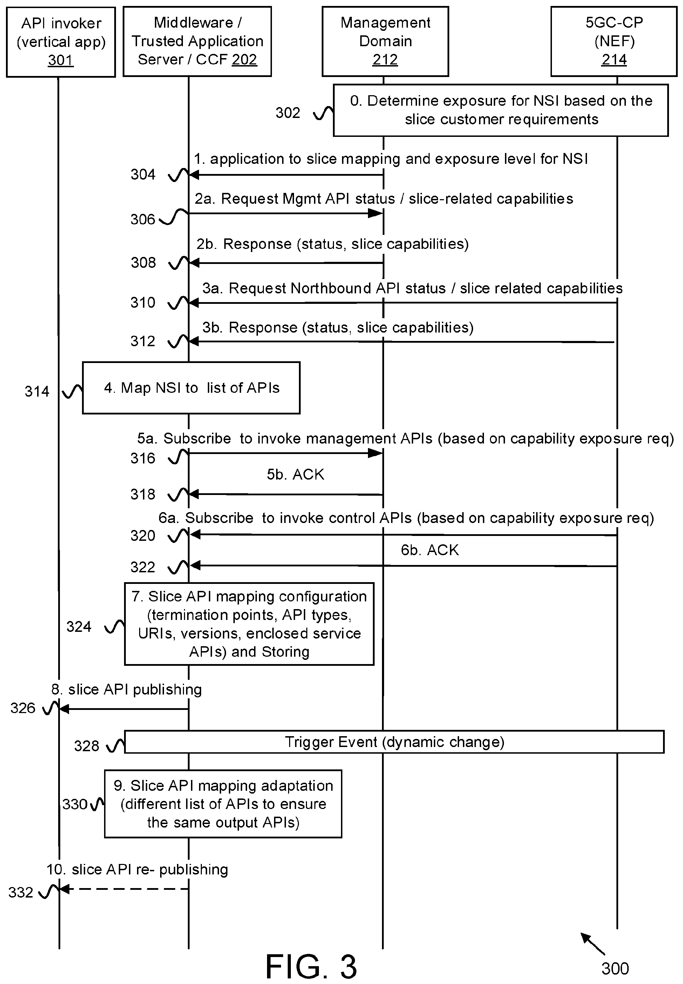

Figure 3 depicts a message sequence chart 300 for a first embodiment of the proposed solution directed to a network slice API configuration. In the depicted embodiment, the middleware 202 is the SA6 defined enabler server (NSE or any other vertical enabler server) and it is assumed that the slice information is already advertised at the slice customer by the network slice provider.

At step 0 (see block 302), the relevant domains, e.g., the management domain 212 and the 5GC-CP (NEF) control plane domain 214 determine the service parameter, e.g., the service exposure level for the NSI based on the slice customer requirements.

At step 1 (see messaging 304), in one embodiment, the relevant domains 212, 214 of the network slice provider ("NSP") send to the middleware 202 the slice registration/information corresponding to the vertical customer for the subscribed NSI(s). This may be from the OAM/MD (if it is related to the slice specific parameters) or from 5GC (UDM) if it is user/device related slice subscription information. Optionally this step may also include an instruction/request to middleware to handle the slice/service API configuration and exposure.

At step 2a (see messaging 306), in one embodiment, the middleware sends a request to the involved management domain(s) 212 to get the available API status and the capabilities related to the slice management services (e.g., NSSI/NSI monitoring, modification, or the like). For example, the middleware 202 can request which version of which standard is supported and which parts of the standard are readable or executable. The involved management domains 212 are known by the middleware 202 from step 1 (e.g., based on the service capability exposure). This message 306 includes at least one of the following parameters:
- Middleware ID
- Request of API name / URI
- Request of API version
- Request of Data format (e.g., serialization protocol)
- Request of API supported features related to slice #X or service #Y
- Exposure level requirement for supported features
- API status query
- API termination points
- Time validity of request

In some embodiments, middleware 202 may already be aware of this information.

At step 2b (see messaging 308), in one embodiment, the management domain 212 provides the API status and slice related management capabilities. This message includes at least one of the following parameters:
- MD ID, MnS ID
- List of API names, types, data formats
- API supported features related to slice/service
- Exposure level of supported features
- API status report

At step 3a (see messaging 310), in one embodiment, the middleware 202 sends a request to the involved CN control plane 214 (e.g., NEF/SCEF) to get the available API status and the capabilities related to the slice related control services that can be exposed (e.g., slice subscriptions, network slice analytics, QoS/network monitoring events, and/or the like). The involved NEFs are known by the middleware 202 from step 1 (e.g., based on the service capability exposure). This message includes at least one of the following parameters:
- Middleware ID
- Request of Northbound API name / URI
- Request of Northbound API version
- Request of Data format (e.g., serialization protocol)
- Request of Northbound API supported features related to slice #X or service #Y
- Exposure level requirement for supported features
- API status query
- API termination points
- Time validity

At step 3b (see messaging 312), in one embodiment, the control plane 214 provides the API status and slice related control exposure capabilities. This message includes at least one the following parameters:
- NEF ID
- List of API names, types, data formats
- API supported features related to slice/service
- Exposure level of supported features
- API status report

At step 4 (see block 314), in one embodiment, the middleware 202 maps the NSI to a list of service APIs based on the service capability exposure requirements for the NSI, the authentication of the external entity, and the availability of service APIs (in certain implementation this can be a mapping table).

At step 5a (see messaging 316), in one embodiment, the middleware 202 sends a subscription request to the affected management services of the management domain(s) 212 to subscribe to the management services ("MnS") as required by the application. The subscribe request may also include the exposure level for the management services (e.g., permissions, granularity of reporting, and/or the like). At step 5b (see messaging 318), the MnS of the management domain 212 sends an acknowledgement ("ACK") to provide the result or an acknowledgement of the subscription.

At step 6a (see messaging 320), in one embodiment, the middleware 202 sends a subscription request to NEF of the involved control plane domain(s) 214 to subscribe for consuming Control / Northbound APIs related to the slice. The subscribe request may also include the exposure level for the control services (e.g., permissions, granularity of reporting, and/or the like). At step 6b (see messaging 322), the NEF of the involved control plane 214 sends an ACK to provide an acknowledgement of the subscription.

At step 7 (see block 324), in one embodiment, the middleware 202, upon subscribing to services, configures the mapping of the provided services to one or more slice APIs for one or more slices. The slice API mapping to services includes the slice API name / identification, the enclosed service API names, URIs, API versions, protocol information, termination points per API, API types included, communication methods (e.g., request-response or subscribe-notify), time validity, and/or the like. Slice APIs may also include service APIs related to value added middleware-provided services. In this step, the slice API info (and enclosed APIs) are stored at the middleware 202.

At step 8 (see block 326), in one embodiment, the middleware 202 may publish the slice API to the API invoker 301 (this could consist of platform-dependent or platform-independent APIs).

At step 9 (see messaging 330), in response to a trigger event (see block 328), the trigger event is captured by the API producers (e.g., control plane 214, management plane 212, SEAL, and/or the like) or the application side (e.g., application server relocation to different EDN/DN, UE mobility to different EDN, application change of behavior, and/or the like) or any other API related event captured by API enablement services (e.g., failure, unavailability) or the middleware 202.

The middleware 202, in one embodiment, processes the trigger event 328 and checks and updates the mapping of service APIs to the slice APIs. The objective is to keep the slice APIs unchanged, so the vertical is not aware of any change. To accomplish this, the service APIs may need to be updated. In this step, the middleware 202 may further support by providing value added services to deal with unavailability of consuming some services.

At step 10 (see messaging 332), in one embodiment, if the slice API information changes, the middleware may re-publish the slice API to the API invoker 301 (this could consist of platform dependent APIs).

Note that further interactions (as of steps 2, 3 5,6 for control and management) can be added for other telco provided services (e.g., cloud/MEC APIs, SEAL APIs, and/or the like).

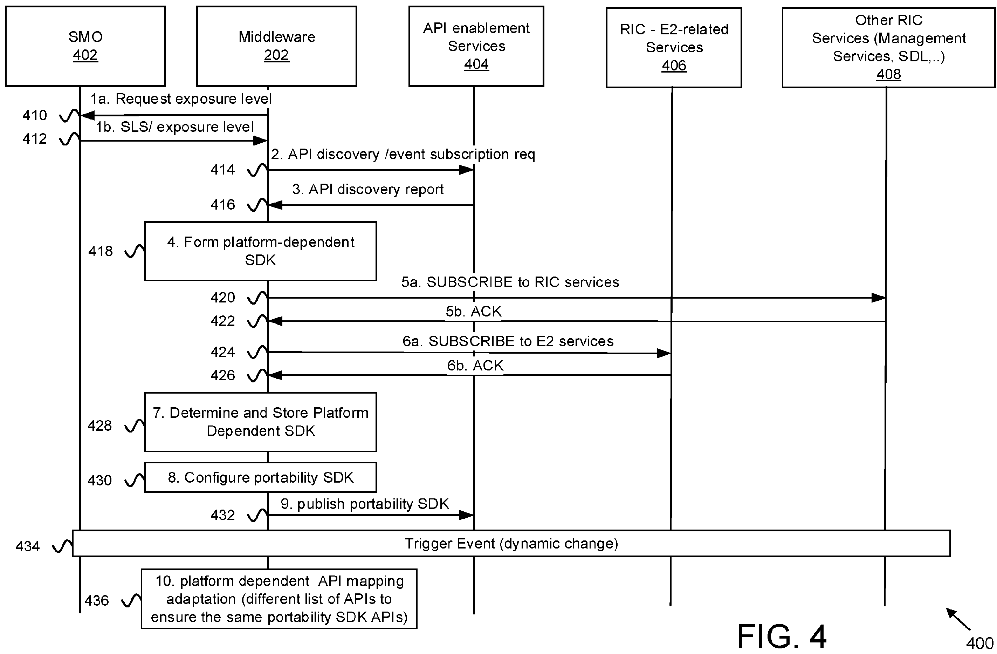

Figure 4 depicts a message sequence chart 400 for a second embodiment of the proposed solution directed to a portability SDK/API mapping configuration (e.g., the platform-independent API/SDK). The depicted embodiment provides a solution for the portability (platform-independent) SDK/API configuration, which includes the mapping of service APIs to be used and translated to the portability (platform-independent) SDK/API as well as the configuration of the simplified APIs based on the mapping.

At step 1a (see messaging 410), in one embodiment, the middleware entity 202 requests the exposure level from a service management orchestrator ("SMO") 402 for an xApp. Different exposure levels can be provided based on the type of xApp (e.g., TS, QoE, RRM, SON, or the like) and the authorization policies for different types of xApps (e.g., xApp can be RIC owned, vendor owned, ASP owned, or the like.)

At step 1b (see messaging 412), in one embodiment, SMO 402 (or M&O) sends to the middleware entity 202, which can be a sidecar, broker, proxy, enablement service, or the like, a message indicating the exposure level per service, per slice, per application type, or the like. This may be in the form of a request/subscription for enabling the middleware entity 202 to configure the portability (platform-independent) SDK/API or a report to the middleware entity 202 about the updated exposure level.

At step 2 (see messaging 414), in one embodiment, the middleware entity 202 checks with the API enablement services 404 for the availability of APIs based on the service exposure level. This check may happen via query to API enablement services 404 to discover which APIs are available and requests other API information (e.g., URI name, API type, API version, communication method, protocol supported, and/or the like). Here, it is assumed that the middleware entity 202 can interact with the API enablement services 404. If the middleware entity 202 is not part of the platform, in certain embodiments, the middleware entity 202 may need to have already discovered the enablement API (e.g., the middleware entity 202 may know the URI for the enablement API) for interacting with API enablement services 404.

At step 3 (see messaging 416), in one embodiment, the middleware entity 202 receives an API discovery response with the information that is requested in step 2. This response may include a report comprising one or more of the following: API name, API type, API version, API protocols, permissions and optionally information on the API status, and/or the like.

At step 4 (see block 418), in one embodiment, the middleware entity 202 maps the APIs to a platform-dependent API/SDK based on the service type, application type, slice, or the like, and the exposure level as provided in step 1. Such mapping could be in form of , but is not limited to a mapping table as below:

| SDK | APIs | API provider details | implementation details | Other information |
|---|---|---|---|---|
| SDK #1 | Control API #x | NEF #x | Per API to store: | libraries (e.g., asyncio, |
| | Management API #y | MnS #y | | |
| | SEAL API #z | SEAL server #z | - Data encoding (e.g., JSON, protobuf, ASN.1) | Prometheus, HTTP...), tools, test/logging framework |
| | O-RAN API #w | RIC function (e.g., conflict mitigation function #1) | | |
| | MEC API #a | RNIS #a | - transport technology (e.g. TCP, gRPC, REST, Kafka) | |
| | | | - API protocol (e.g., OpenAPI, proto) | |

It is noted that in such an embodiment an SDK provider, MNO, telecom infrastructure vendor, application service provider, a vertical service provider, cloud provider, middleware platform provider, or the like may provide the platform dependent SDK/API information. It is also noted that other representations could be possible apart from the mapping.

At step 5a (see messaging 420), in one embodiment, the middleware entity 202 sends a subscription request to the affected management services of the management domain(s) 408 to subscribe for consuming MnS service APIs related to the slice. The subscribe request may also include the exposure level for the management services (e.g., permissions, granularity of reporting, or the like). This subscription may be done also via API enablement service/enablement API 404. At step 5b (see messaging 422), in one embodiment, the MnS of the management domain (or API enablement service 404) sends an ACK message to provide an acknowledgement of the subscription.

At step 6a (see messaging 424), in one embodiment, the middleware entity 202 sends a subscription request to subscription management function of RIC 406 (or API enablement services 404) to subscribe for consuming Control/E2-related APIs related to the slice. The subscribe request may also include the exposure level for the control services (e.g., permissions, granularity of reporting, or the like). At step 6b (see messaging 426), in one embodiment, RIC 406, e.g., the subscription management function or other RIC function, sends an ACK to provide an acknowledgement of the subscription.

At step 7 (see block 428), in one embodiment, the middleware entity 202 upon subscribing to services, determines the mapping of the provided services to one or more SDK/APIs. Platform dependent SDK/APIs may also include service APIs related to value added middleware provided services.

At step 8 (see block 430), in one embodiment, the middleware entity 202 configures a platform-independent SDK/API based on the platform-dependent SDKs/APIs (as of step 4), and the following criteria:
- impact on the overall complexity / latency for simplifying the API;
- protocol-level impacts;
- application requirements for portability;
- slice related requirements for exposure capabilities;
- security aspects with respect to the type of xApp (e.g., trusted or untrusted). Network topology may be hidden;
- capabilities of the end application;
- dependencies among services (this may require combining services in a new API. An example may be an MnS, and a control service related to RAN slice assurance. In that case, the xApp may consume a simplified API combining both services);
- SLA/SLS
- QoS or QoE requirements for the application sessions (per UE or group of UEs or a topological/geographical/service area)

The output of such processing at the middleware entity 202 will be a platform independent SDK/API with all the necessary information and mapping to the platform dependent APIs. This could be in form of a table:

| Platform-independent SDK | Platform dependent SDK APIs | Platform independent APIs | implementation details | Other information |
|---|---|---|---|---|
| Portability SDK #1 | Control API #x | Service API #1 (e.g., QoS API) | Portability SDK implementation aspects (e.g., programming language, permissions), API load control parameters (thresholds for self-API throttling, rate limiting) | libraries (e.g., asyncio, Prometheus, HTTP...), tools, test/logging framework, code samples... |
| | Management API #y | | | |
| | SEAL API #z | Service API #2 (e.g., Location API) | | |
| | O-RAN API #w | Service API #3 (e.g., Traffic Steering Opt. API) | | |
| | MEC API #a | Service API #4 (Predictive QoE API) | | |

At step 9 (see messaging 432), in one embodiment, the middleware entity 202 publishes the platform-independent API for use by end applications.

At step 10 (see messaging 410), in one embodiment, in response to a trigger event (see block 434), the trigger event is captured by the API producers (e.g., control plane, management plane, SEAL, or the like) or the application side (application server relocation to different EDN/DN, UE mobility to different EDN, application change of behavior, or the like) or any other API related event captured by API enablement services 404 (e.g., failure, unavailability, or the like).

The middleware entity 202 processes the trigger event and checks and updates the mapping of service APIs, which consist of the platform dependent SDK/API, to the portability (platform-independent) SDK/APIs. The objective is to keep the portability (platform-independent) APIs unchanged, so the vertical is not aware of any change. To accomplish this, the service APIs may need to be updated. In this step, the middleware entity 202 may further support by providing value added services to deal with unavailability of consuming some services.

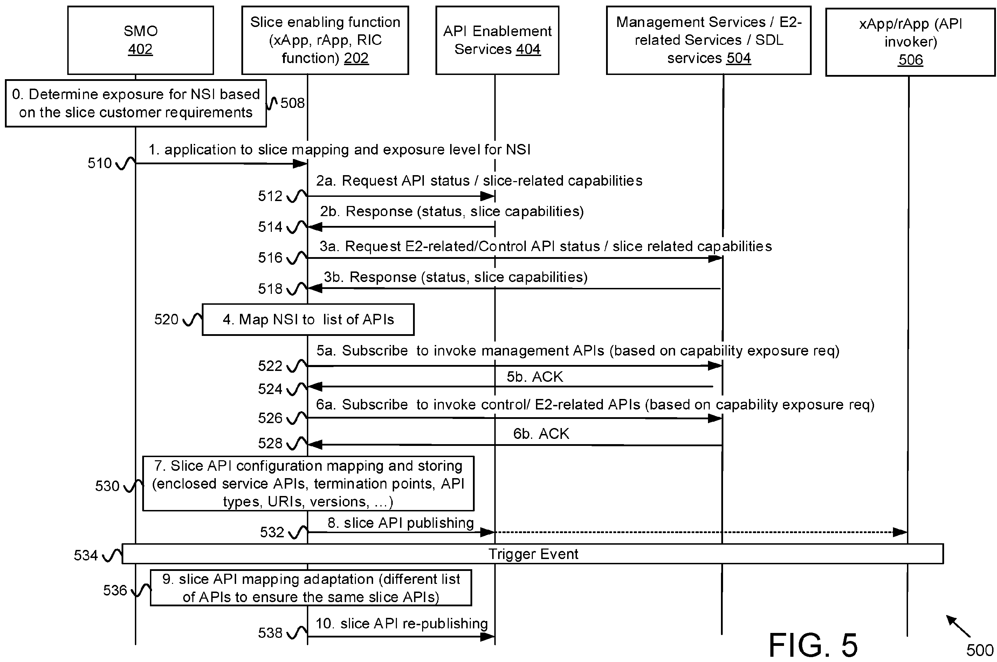

Figure 5 depicts a message sequence chart 500 for a third embodiment of the proposed solution directed to configuration and provisioning of the mapping of new type of application programming interface ("API") (e.g., a platform independent API, a network slice API, and/or a portability API, described below) to the platform dependent implementations of management or control plane APIs for O-RAN.

At step 0 (see block 508), the SMO 402 determines the service parameter, e.g., the service exposure level for the NSI based on the slice customer requirements.

At step 1 (see messaging 510), in one embodiment, the SMO 402 (e.g., NSP relevant MD) sends to the middleware entity 202, which may a slice-enabling function such as an xApp, rApp, or RIC function, the application to slice subscription information as well as the agreed service capability exposure for the subscribed NSI(s). This step may also include an instruction/request for the middleware entity 502 to handle the slice/service API configuration and exposure.

At step 2a (see messaging 512), in one embodiment, the middleware entity 202 sends a request to the involved management domain(s) to get the available API status and the capabilities related to the slice management services (e.g., NSSI/NSI monitoring, modification, or the like). The involved management domains are known by the middleware entity 202 from step 1 (based on the service capability exposure). This message includes at least one of the following parameters:
- Middleware ID (xApp/ rApp ID)
- Request of API name / URI
- Request of API version
- Request of Data format (e.g., serialization protocol)
- Request of API supported features related to slice #X or service #Y
- Exposure level requirement for supported features
- API status query
- API termination points
- Time validity

At step 2b (see messaging 514), in one embodiment, the management domain provides the API status and slice related management capabilities. This message includes at least one the following parameters:
- MD ID, MnS ID
- List of API names, types, data formats
- API supported features related to slice/service
- Exposure level of supported features
- API status report

At step 3a (see messaging 516), in one embodiment, the middleware entity 202 sends a request to the API enablement services 404 or the affected Control / E2-related function 504 to get the available API status and the capabilities related to the slice-related control services that can be exposed (e.g., slice subscriptions, network slice analytics, QoS/network monitoring events, and/or the like). The API enablement services 404 as well as the enablement API is known by the middleware entity 202 from step 1 (based on the service capability exposure). This message includes at least one of the following parameters:
- Middleware ID / xApp or rApp ID
- Request of E2-related or Control API name / URI
- Request of E2-related or Control API version
- Request of Data format (e.g., serialization protocol)
- Request of E2-related or Control API supported features related to slice #X or service #Y
- Exposure level requirement for supported features
- E2-related or Control status query
- E2-related or Control termination points
- Time validity

At step 3b (see messaging 518), in one embodiment, the API enablement services 404 (or the relevant control/E2 related functionality 504) provides the API status and slice related control exposure capabilities. This message includes at least one the following parameters:
- RIC function ID
- List of API names, types, data formats
- API supported features related to slice/service
- Exposure level of supported features
- API status report

At step 4 (see block 520), in one embodiment, the middleware entity 202 maps the NSI to a list of service APIs based on the service capability exposure requirements for the NSI and the availability of service APIs. In certain implementations, this can be a mapping table.

At step 5a (see messaging 522), in one embodiment, the middleware entity 202 sends a subscription request to the affected management services 504 of the management domain(s) to subscribe for consuming MnS service APIs related to the slice. The subscribe request may also include the exposure level for the management services (e.g., permissions, granularity of reporting, or the like. This subscription can also be done via the API enablement services 404 / enablement API. At step 5b (see messaging 524), in one embodiment, the MnS of the management domain (or the API enablement service 404) sends an ACK to provide an acknowledgement of the subscription.

At step 6a (see messaging 526), in one embodiment, the middleware entity 202 sends a subscription request to a management function 504, e.g., a subscription management function of a RIC (or the API enablement services 404) to subscribe for consuming Control / E2-related APIs related to the slice. The subscribe request may also include the exposure level for the control services (e.g., permissions, granularity of reporting, and/or the like). At step 6b (see messaging 528), in one embodiment, the management function 504, e.g., the subscription management function, or any other RIC function, sends an ACK to provide an acknowledgement of the subscription.

At step 7 (see block 530), in one embodiment, the middleware entity 202 upon subscribing to services, configures the mapping of the provided services to one or more slice APIs for one or more slices. The slice API mapping to services includes the slice API name/identification, the enclosed service API names, URIs, API versions, protocol information, termination points per API, API types included, communication methods (e.g., request-response or subscribe-notify), time validity, and/or the like. Slice APIs may also include service APIs related to value added middleware provided services. In this step, the slice API info, and enclosed APIs, are stored at the middleware entity 202.

At step 8 (see messaging 532), in one embodiment, the middleware entity 202 publishes the slice APIs for use by end applications.

At step 9 (see messaging 536), in one embodiment, a trigger event (see block 534) is detected and captured by the O-RAN API producers 504, 506 or API enablement functionality 404 or the application side (e.g., application server relocation to different RIC platform, UE mobility, application change of behavior, and/or the like) or any other API related event captured by API enablement services 404 (e.g., failure, unavailability).

The middleware entity 202, in one embodiment, processes the trigger event and checks and updates the mapping of O-RAN RIC APIs to the slice APIs. The objective is to keep the slice APIs unchanged, so the vertical is not aware of any change. To accomplish this, the O-RAN RIC APIs may need to be updated. In this step, the middleware entity 202 may further support by providing value added services to deal with unavailability of consuming some services.

At step 10 (see messaging 538), in one embodiment, the middleware entity 202 republishes the slice APIs, if needed.

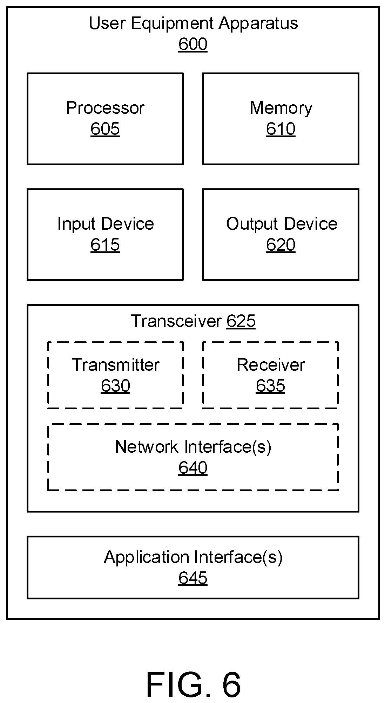

Figure 6 depicts a user equipment apparatus 600 that may be used for configuring platform independent application programming interfaces, according to embodiments of the disclosure. In various embodiments, the user equipment apparatus 600 is used to implement one or more of the solutions described above. The user equipment apparatus 600 may be implemented in a vertical device, such as the remote unit 105, the client device 201, and/or the vertical device 301, described above. Furthermore, the user equipment apparatus 600 may include a processor 605, a memory 610, an input device 615, an output device 620, and a transceiver 625. In some embodiments, the input device 615 and the output device 620 are combined into a single device, such as a touchscreen. In certain embodiments, the user equipment apparatus 600 may not include any input device 615 and/or output device 620. In various embodiments, the user equipment apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. Here, the transceiver 625 communicates with one or more remote units 105. Additionally, the transceiver 625 may support at least one network interface 640. In some embodiments, the transceiver 625 supports a first interface (e.g., Uu interface) for communicating with one or more base units in a RAN, a second interface (e.g., N1 interface) for communicating with an AMF, and a third interface for communicating with a TSN system.

The processor 605, in one embodiment, may include any known controller capable of executing computer-readable instructions and/or capable of performing logical operations. For example, the processor 605 may be a microcontroller, a microprocessor, a central processing unit ("CPU"), a graphics processing unit ("GPU"), an auxiliary processing unit, a FPGA, or similar programmable controller. In some embodiments, the processor 605 executes instructions stored in the memory 610 to perform the methods and routines described herein. The processor 605 is communicatively coupled to the memory 610, the input device 615, the output device 620, and the transceiver 625. In various embodiments, the processor 605 controls the user equipment apparatus 600 to implement the above described UE behaviors, client device behaviors, and/or vertical device behaviors.

The user equipment apparatus 600 supports one or more application interfaces 645. Each application interface 645 supports communication among application instances running on the user equipment apparatus 600 and/or supports communication with an external application instance, e.g., running on a network device or a UE. In some embodiments, the application interface(s) 645 include a set of functions and procedures that allow for applications running on the user equipment apparatus 600 to access data and features of other applications, services, or operating systems. For example, a SEAL client running on the user equipment apparatus 600 may use an application interface 645 to communicate with a SEAL server. As another example, a V2X application running on the user equipment apparatus 600 may use an application interface 645 to communicate with a V2X application server.

The memory 610, in one embodiment, is a computer readable storage medium. In some embodiments, the memory 610 includes volatile computer storage media. For example, the memory 610 may include a RAM, including dynamic RAM ("DRAM"), synchronous dynamic RAM ("SDRAM"), and/or static RAM ("SRAM"). In some embodiments, the memory 610 includes non-volatile computer storage media. For example, the memory 610 may include a hard disk drive, a flash memory, or any other suitable non-volatile computer storage device. In some embodiments, the memory 610 includes both volatile and non-volatile computer storage media.

In some embodiments, the memory 610 stores data related to for configuring platform independent application programming interfaces. For example, the memory 610 may store service requirements, API mappings, application requirements, related parameters, and the like. In certain embodiments, the memory 610 also stores program code and related data, such as an operating system or other controller algorithms operating on the remote unit 105.

The input device 615, in one embodiment, may include any known computer input device including a touch panel, a button, a keyboard, a stylus, a microphone, or the like. In some embodiments, the input device 615 may be integrated with the output device 620, for example, as a touchscreen or similar touch-sensitive display. In some embodiments, the input device 615 includes a touchscreen such that text may be input using a virtual keyboard displayed on the touchscreen and/or by handwriting on the touchscreen. In some embodiments, the input device 615 includes two or more different devices, such as a keyboard and a touch panel.

The output device 620, in one embodiment, is designed to output visual, audible, and/or haptic signals. In some embodiments, the output device 620 includes an electronically controllable display or display device capable of outputting visual data to a user. For example, the output device 620 may include, but is not limited to, an LCD display, an LED display, an OLED display, a projector, or similar display device capable of outputting images, text, or the like to a user. As another, non-limiting, example, the output device 620 may include a wearable display separate from, but communicatively coupled to, the rest of the user equipment apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

In certain embodiments, the output device 620 includes one or more speakers for producing sound. For example, the output device 620 may produce an audible alert or notification (e.g., a beep or chime). In some embodiments, the output device 620 includes one or more haptic devices for producing vibrations, motion, or other haptic feedback. In some embodiments, all or portions of the output device 620 may be integrated with the input device 615. For example, the input device 615 and output device 620 may form a touchscreen or similar touch-sensitive display. In other embodiments, the output device 620 may be located near the input device 615.

The transceiver 625 operates under the control of the processor 605 to transmit messages, data, and other signals and also to receive messages, data, and other signals. For example, the processor 605 may selectively activate the transceiver (or portions thereof) at particular times in order to send and receive messages.

In various embodiments, the transceiver 625 is configured to communicate with 3GPP access network(s) and/or the non-3GPP access network(s). In some embodiments, the transceiver 625 implements modem functionality for the 3GPP access network(s) and/or the non-3GPP access network(s). In one embodiment, the transceiver 625 implements multiple logical transceivers using different communication protocols or protocol stacks, while using common physical hardware.

In one embodiment, the transceiver 625 includes a first transmitter/receiver pair used to communicate with a mobile communication network over licensed radio spectrum and a second transmitter/receiver pair used to communicate with a mobile communication network over unlicensed radio spectrum. In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 625, transmitters 630, and receivers 635 may be implemented as physically separate components that access a shared hardware resource and/or software resource, such as for example, the network interface 640.

The transceiver 625 may include one or more transmitters 630 and one or more receivers 635. Although a specific number of transmitters 630 and receivers 635 are illustrated, the user equipment apparatus 600 may have any suitable number of transmitters 630 and receivers 635. Further, the transmitter(s) 630 and the receiver(s) 635 may be any suitable type of transmitters and receivers. In certain embodiments, the one or more transmitters 630 and/or the one or more receivers 635 may share transceiver hardware and/or circuitry. For example, the one or more transmitters 630 and/or the one or more receivers 635 may share antenna(s), antenna tuner(s), amplifier(s), filter(s), oscillator(s), mixer(s), modulator/demodulator(s), power supply, and the like.

In various embodiments, one or more transmitters 630 and/or one or more receivers 635 may be implemented and/or integrated into a single hardware component, such as a multi-transceiver chip, a system-on-a-chip, an application-specific integrated circuit ("ASIC"), or other type of hardware component. In certain embodiments, one or more transmitters 630 and/or one or more receivers 635 may be implemented and/or integrated into a multi-chip module. In some embodiments, other components such as the network interface 640 or other hardware components/circuits may be integrated with any number of transmitters 630 and/or receivers 635 into a single chip. In such embodiment, the transmitters 630 and receivers 635 may be logically configured as a transceiver 625 that uses one more common control signals or as modular transmitters 630 and receivers 635 implemented in the same hardware chip or in a multi-chip module. In certain embodiments, the transceiver 625 may implement a 3GPP modem (e.g., for communicating via NR or LTE access networks) and a non-3GPP modem (e.g., for communicating via Wi-Fi or other non-3GPP access networks).

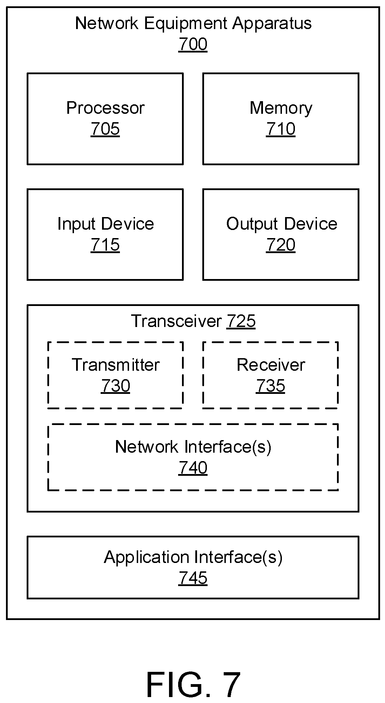

Figure 7 depicts one embodiment of a network equipment apparatus 700 that may be used for configuring platform independent application programming interfaces, according to embodiments of the disclosure. In some embodiments, the network equipment apparatus 700 may be one embodiment of a trusted application entity (e.g., middleware), such as the VAL server 151, the SEAL server 155, the edge enabler server 145, the enabler server 213, the SEAL/NSE server 307, and/or the VAL server 309. Furthermore, network equipment apparatus 700 may include a processor 705, a memory 710, an input device 715, an output device 720, a transceiver 725. In some embodiments, the input device 715 and the output device 720 are combined into a single device, such as a touch screen. In certain embodiments, the network equipment apparatus 700 does not include any input device 715 and/or output device 720.

As depicted, the transceiver 725 includes at least one transmitter 730 and at least one receiver 735. Here, the transceiver 725 communicates with one or more remote units 105. Additionally, the transceiver 725 may support at least one network interface 740, such as the N1, N2, and N3 interfaces. In some embodiments, the transceiver 725 supports a first interface for communicating with one or more network functions in a mobile core network (e.g., a 5GC and/or EPC), a second interface for communicating with a TSN system, and a third interface for communicating with a remote unit (e.g., UE).

The processor 705, in one embodiment, may include any known controller capable of executing computer-readable instructions and/or capable of performing logical operations. For example, the processor 705 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725. In various embodiments, the processor 705 controls the user equipment apparatus 700 to implement the above described network behaviors.

Via the transceiver 725, in one embodiment, the processor 705 receives a service parameter of at least one network service of a wireless communication system, wherein the wireless communication system comprises one or more platforms. The processor 705, in certain embodiments, determines a platform-independent application programming interface ("API") based on the service parameter for the at least one network service of the wireless communication system.

The processor 705, in one embodiment, publishes the platform-independent API to an API invoker for use by end applications across different wireless communication systems. In further embodiments, the processor 705 registers with the at least one network service for gaining access to invoke the at least one service API. In some embodiments, the processor 705 determines the platform-independent API based on a mapping to at least one platform-dependent API.

In one embodiment, the processor 705 detects a trigger event associated with the platform-dependent API and updates the platform-dependent API in response to the trigger event while ensuring compatibility with the platform-independent API. In some embodiments, the trigger event includes a mobility of a user equipment ("UE"), a relocation of an application server to a different wireless communication system, an unavailability of a service API of the at least one network service of the wireless communication system, an indication of actual or expected API high load and/or congestion, a relocation of an application client of the UE to a different wireless communication platform, a network quality of service change indication, a UE quality of service and/or quality of experience change indication, a UE context change indication, and a network unit failure indication.

In one embodiment, the mapping of the at least one service API for the at least one network service to the at least one platform-dependent API is based on determining an availability of the service APIs by at least one of receiving, by the processor 705 via a transceiver 725, a periodic heartbeat message from the at least one network service associated with the at least one service API and checking, by the processor 705, an API enablement service for the at least one network service.

In one embodiment, the service parameter of the at least one network service is for a network slice instance ("NSI") of a vertical customer of the wireless communication system and the platform-dependent API comprises a software development kit API that is customized for the vertical customer.

In certain embodiments, the processor 705 sends, via the transceiver 725, a request for an availability status of a management API and capabilities related to slice management services for the NSI to a management domain. The request includes at least one of a middleware ID, a request of API name, a request of API URI, a request of API version, a request of data format, a request of API supported features related to at least one of a slice and a service, an exposure level requirement for supported features, an API status query, API termination points, and a time validity of request.

In one embodiment, the processor 705 receives, via the transceiver 725, a response message comprising at least one of the following parameters: MD ID, MnS ID, list of API names, types, and data formats, API supported features related to the at least one of the slice and service, exposure level of supported features, and API status report. In one embodiment, the processor 705, via the transceiver 725, sends a request for an availability status of a control plane API and capabilities related to slice-related control services for the NSI to a control plane. The request includes at least one of a middleware ID, a request of Northbound API name, a request of Northbound URI, a request of Northbound API version, a request of data format, a request of Northbound API supported features related to at least one of a slice and a service, an exposure level requirement for supported features, an API status query, API termination points, and a time validity.

In one embodiment, the processor 705 receives, via the transceiver 725, a response message comprising at least one of the following parameters: a NEF ID, a list of API names, types, and data formats, an API supported features related to the at least one of the slice and service, an exposure level of supported features, and an API status report.

In one embodiment, the processor 705, via the transceiver 725, sends a request for an availability status of E2-related function API and capabilities related to slice-related control services for the NSI to an E2-related function. The request includes one of a middleware ID, an xApp ID, and an rApp ID, a request of E2-related API name, a request of E2-related URI, a request of E2-related version, a request of data format, a request of E2-related supported features related to at least one of a slice and a service, an exposure level requirement for supported features, a E2-related status query, a E2-related termination points, and time validity.

In one embodiment, the processor 705, via the transceiver 725, receives a response message comprising at least one of the following parameters: RIC function ID, list of API names, types, and data formats, API supported features related to the at least one of the slice and service, exposure level of supported features, and API status report.

In one embodiment, the mapping of the at least one service API for the at least one NSI to at least one platform-dependent API is done by matching the service parameter of the at least one network service with at least one capability parameter for the NSI. In certain embodiments, the mapping of the platform-dependent API to a platform-independent API for the NSI comprises at least one of a platform-independent API name/identification, enclosed service API names, URIs, API versions, protocol information, termination points per API, API types, communication methods, and time validity.

In one embodiment, the processor 705, via the transceiver 725, requests the service parameter from a service management orchestrator ("SMO") for the at least one network service. The service parameter may be based on at least one of a type of the at least one network service and an authorization to access the at least one network service. In some embodiments, the processor 705, via the transceiver 725, receives a message from the SMO comprising the service parameter for the at least one network service for at least one of a service, a slice, and an application type.

In one embodiment, the at least one network service comprises an external application ("xApp"). In some embodiments, the mapping of the platform-dependent API to a platform-independent API for the at least one network service comprises at least one of an impact on the overall complexity/latency for simplifying the API, protocol-level impacts, application requirements for portability, slice related requirements for exposure capabilities, security aspects related to a type of network function, capabilities of an end application, dependencies among services, and a service level agreement ("SLA").

The network equipment apparatus 700 supports one or more application interfaces 745. Each application interface 745 supports communication among application instances running on the user equipment apparatus 700 and/or supports communication with an external application instance, e.g., running on a network device or a UE. In some embodiments, the application interface(s) 745 include a set of functions and procedures that allow for applications running on the network equipment apparatus 700 to access data and features of other applications, services, or operating systems. As described in further detail below, a SEAL client 107 running on the network equipment apparatus 700 may use an application interface 745 to communicate with a SEAL server 155. As another example, a VAL application running on the network equipment apparatus 700 may use an application interface 745 to communicate with a VAL application server 151.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data for configuring platform independent application programming interfaces, for example storing service requirements, QoS requirements, QoE requirements, mappings, application requirements, related parameters, and the like. In certain embodiments, the memory 710 also stores program code and related data, such as an operating system ("OS") or other controller algorithms operating on the network equipment apparatus 700 and one or more software applications.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, may include any known electronically controllable display or display device. The output device 720 may be designed to output visual, audible, and/or haptic signals. In some embodiments, the output device 720 includes an electronic display capable of outputting visual data to a user. For example, the output device 720 may include, but is not limited to, an LCD display, an LED display, an OLED display, a projector, or similar display device capable of outputting images, text, or the like to a user. As another, non-limiting, example, the output device 720 may include a wearable display such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all or portions of the output device 720 may be integrated with the input device 715. For example, the input device 715 and output device 720 may form a touchscreen or similar touch-sensitive display. In other embodiments, all or portions of the output device 720 may be located near the input device 715.

As discussed above, the transceiver 725 may communicate with one or more remote units and/or with one or more network functions that provide access to one or more PLMNs. The transceiver 725 may also communicate with one or more network functions (e.g., in the mobile core network 120). The transceiver 725 operates under the control of the processor 705 to transmit messages, data, and other signals and also to receive messages, data, and other signals. For example, the processor 705 may selectively activate the transceiver (or portions thereof) at particular times in order to send and receive messages.

The transceiver 725 may include one or more transmitters 730 and one or more receivers 735. In certain embodiments, the one or more transmitters 730 and/or the one or more receivers 735 may share transceiver hardware and/or circuitry. For example, the one or more transmitters 730 and/or the one or more receivers 735 may share antenna(s), antenna tuner(s), amplifier(s), filter(s), oscillator(s), mixer(s), modulator/demodulator(s), power supply, and the like. In one embodiment, the transceiver 725 implements multiple logical transceivers using different communication protocols or protocol stacks, while using common physical hardware.

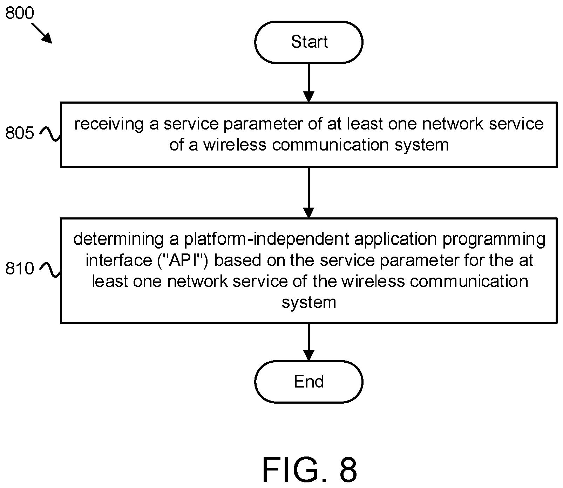

Figure 8 depicts one embodiment of a method 800 for configuring platform independent application programming interfaces, according to embodiments of the disclosure. In various embodiments, the method 800 is performed by a trusted application entity (e.g., middleware), such as the VAL server 151, the SEAL server 155, the edge enabler server 145, the enabler server 202, and/or the like, described above. In some embodiments, the method 800 is performed by a processor, such as a microcontroller, a microprocessor, a CPU, a GPU, an auxiliary processing unit, a FPGA, or the like.

The method 800 begins and, in one embodiment, receives 805 a service parameter of at least one network service of a wireless communication system. The wireless communication system may include one or more platforms. In one embodiment, the method 800 determines a platform-independent application programming interface ("API") based on the service parameter for the at least one network service of the wireless communication system. The method 800 ends.

Disclosed herein is a first apparatus for configuring platform independent application programming interfaces, according to embodiments of the disclosure. The first apparatus may be implemented by a trusted application entity (e.g., middleware), such as the VAL server 151, the SEAL server 155, the edge enabler server 145, the trusted application server 202, and/or the network apparatus 700. The first apparatus includes a transceiver that, in one embodiment, receives a service parameter of at least one network service of a wireless communication system, wherein the wireless communication system comprises one or more platforms. The first apparatus, in further embodiments, includes a processor that determines a platform-independent application programming interface ("API") based on the service parameter for the at least one network service of the wireless communication system. The first apparatus, in further embodiments, includes memory or other storage and may comprise a repository to store the determined platform-independent API and the mapping to platform dependent APIs.

The processor, in one embodiment, publishes the platform-independent API to an API invoker for use by end applications across different wireless communication systems. In further embodiments, the processor registers with the at least one network service for gaining access to invoke the at least one service API. In some embodiments, the processor determines the platform-independent API based on a mapping to at least one platform-dependent API.

In one embodiment, the processor detects a trigger event associated with the platform-dependent API and updates the platform-dependent API in response to the trigger event while ensuring compatibility with the platform-independent API. In some embodiments, the trigger event includes a mobility of a user equipment ("UE"), a relocation of an application server to a different wireless communication system, an unavailability of a service API of the at least one network service of the wireless communication system, an indication of actual or expected API high load and/or congestion, a relocation of an application client of the UE to a different wireless communication platform, a network quality of service change indication, a UE quality of service and/or quality of experience change indication, a UE context change indication, and a network unit failure indication.

In one embodiment, the mapping of the at least one service API for the at least one network service to the at least one platform-dependent API is based on determining an availability of the service APIs by at least one of receiving, by the transceiver, a periodic heartbeat message from the at least one network service associated with the at least one service API and checking, by the processor, an API enablement service for the at least one network service.

In one embodiment, the service parameter of the at least one network service is for a network slice instance ("NSI") of a vertical customer of the wireless communication system and the platform-dependent API comprises a software development kit API that is customized for the vertical customer.

In certain embodiments, the transceiver sends a request for an availability status of a management API and capabilities related to slice management services for the NSI to a management domain. The request includes at least one of a middleware ID, a request of API name, a request of API URI, a request of API version, a request of data format, a request of API supported features related to at least one of a slice and a service, an exposure level requirement for supported features, an API status query, API termination points, and a time validity of request.

In one embodiment, the transceiver receives a response message comprising at least one of the following parameters: MD ID, MnS ID, list of API names, types, and data formats, API supported features related to the at least one of the slice and service, exposure level of supported features, and API status report. In one embodiment, the transceiver sends a request for an availability status of a control plane API and capabilities related to slice-related control services for the NSI to a control plane. The request includes at least one of a middleware ID, a request of Northbound API name, a request of Northbound URI, a request of Northbound API version, a request of data format, a request of Northbound API supported features related to at least one of a slice and a service, an exposure level requirement for supported features, an API status query, API termination points, and a time validity.

In one embodiment, the transceiver receives a response message comprising at least one of the following parameters: a NEF ID, a list of API names, types, and data formats, an API supported features related to the at least one of the slice and service, an exposure level of supported features, and an API status report.

In one embodiment, the transceiver sends a request for an availability status of E2-related function API and capabilities related to slice-related control services for the NSI to an E2-related function. The request includes one of a middleware ID, an xApp ID, and an rApp ID, a request of E2-related API name, a request of E2-related URI, a request of E2-related version, a request of data format, a request of E2-related supported features related to at least one of a slice and a service, an exposure level requirement for supported features, a E2-related status query, a E2-related termination points, and time validity.

In one embodiment, the transceiver receives a response message comprising at least one of the following parameters: RIC function ID, list of API names, types, and data formats, API supported features related to the at least one of the slice and service, exposure level of supported features, and API status report.

In one embodiment, the mapping of the at least one service API for the at least one NSI to at least one platform-dependent API is done by matching the service parameter of the at least one network service with at least one capability parameter for the NSI. In certain embodiments, the mapping of the platform-dependent API to a platform-independent API for the NSI comprises at least one of a platform-independent API name/identification, enclosed service API names, URIs, API versions, protocol information, termination points per API, API types, communication methods, and time validity.

In one embodiment, the transceiver requests the service parameter from a service management orchestrator ("SMO") for the at least one network service. The service parameter may be based on at least one of a type of the at least one network service and an authorization to access the at least one network service. In some embodiments, the transceiver, receives a message from the SMO comprising the service parameter for the at least one network service for at least one of a service, a slice, and an application type.

In one embodiment, the at least one network service comprises an external application ("xApp"). In some embodiments, the mapping of the platform-dependent API to a platform-independent API for the at least one network service comprises at least one of an impact on the overall complexity/latency for simplifying the API, protocol-level impacts, application requirements for portability, slice related requirements for exposure capabilities, security aspects related to a type of network function, capabilities of an end application, dependencies among services, and a service level agreement ("SLA").

Disclosed herein is a first method for configuring platform independent application programming interfaces, according to embodiments of the disclosure. The first method may be performed by a trusted application entity (e.g., middleware), such as the VAL server 151, the IM server 153, the edge enabler server 145, the trusted application server 202, and/or the network apparatus 700. The first method includes receiving, in one embodiment, a service parameter of at least one network service of a wireless communication system. The wireless communication system includes one or more platforms. The first method, in further embodiments, includes determining a platform-independent application programming interface ("API") based on the service parameter for the at least one network service of the wireless communication system.

The first method, in one embodiment, publishes the platform-independent API to an API invoker for use by end applications across different wireless communication systems. In further embodiments, the first method registers with the at least one network service for gaining access to invoke the at least one service API. In some embodiments, the first method determines the platform-independent API based on a mapping to at least one platform-dependent API.

In one embodiment, the first method detects a trigger event associated with the platform-dependent API and updates the platform-dependent API in response to the trigger event while ensuring compatibility with the platform-independent API. In some embodiments, the trigger event includes a mobility of a user equipment ("UE"), a relocation of an application server to a different wireless communication system, an unavailability of a service API of the at least one network service of the wireless communication system, an indication of actual or expected API high load and/or congestion, a relocation of an application client of the UE to a different wireless communication platform, a network quality of service change indication, a UE quality of service and/or quality of experience change indication, a UE context change indication, and a network unit failure indication.

In one embodiment, the mapping of the at least one service API for the at least one network service to the at least one platform-dependent API is based on determining an availability of the service APIs by at least one of receiving, by the first method, a periodic heartbeat message from the at least one network service associated with the at least one service API and checking, by the first method, an API enablement service for the at least one network service.

In one embodiment, the service parameter of the at least one network service is for a network slice instance ("NSI") of a vertical customer of the wireless communication system and the platform-dependent API comprises a software development kit API that is customized for the vertical customer.

In certain embodiments, the first method sends a request for an availability status of a management API and capabilities related to slice management services for the NSI to a management domain. The request includes at least one of a middleware ID, a request of API name, a request of API URI, a request of API version, a request of data format, a request of API supported features related to at least one of a slice and a service, an exposure level requirement for supported features, an API status query, API termination points, and a time validity of request.

In one embodiment, the first method receives a response message comprising at least one of the following parameters: MD ID, MnS ID, list of API names, types, and data formats, API supported features related to the at least one of the slice and service, exposure level of supported features, and API status report. In one embodiment, the first method sends a request for an availability status of a control plane API and capabilities related to slice-related control services for the NSI to a control plane. The request includes at least one of a middleware ID, a request of Northbound API name, a request of Northbound URI, a request of Northbound API version, a request of data format, a request of Northbound API supported features related to at least one of a slice and a service, an exposure level requirement for supported features, an API status query, API termination points, and a time validity.

In one embodiment, the first method receives a response message comprising at least one of the following parameters: a NEF ID, a list of API names, types, and data formats, an API supported features related to the at least one of the slice and service, an exposure level of supported features, and an API status report.

In one embodiment, the first method sends a request for an availability status of E2-related function API and capabilities related to slice-related control services for the NSI to an E2-related function. The request includes one of a middleware ID, an xApp ID, and an rApp ID, a request of E2-related API name, a request of E2-related URI, a request of E2-related version, a request of data format, a request of E2-related supported features related to at least one of a slice and a service, an exposure level requirement for supported features, a E2-related status query, a E2-related termination points, and time validity.

In one embodiment, the first method receives a response message comprising at least one of the following parameters: RIC function ID, list of API names, types, and data formats, API supported features related to the at least one of the slice and service, exposure level of supported features, and API status report.

In one embodiment, the mapping of the at least one service API for the at least one NSI to at least one platform-dependent API is done by matching the service parameter of the at least one network service with at least one capability parameter for the NSI. In certain embodiments, the mapping of the platform-dependent API to a platform-independent API for the NSI comprises at least one of a platform-independent API name/identification, enclosed service API names, URIs, API versions, protocol information, termination points per API, API types, communication methods, and time validity.

In one embodiment, the first method requests the service parameter from a service management orchestrator ("SMO") for the at least one network service. The service parameter may be based on at least one of a type of the at least one network service and an authorization to access the at least one network service. In some embodiments, the first method, receives a message from the SMO comprising the service parameter for the at least one network service for at least one of a service, a slice, and an application type.

In one embodiment, the at least one network service comprises an external application ("xApp"). In some embodiments, the mapping of the platform-dependent API to a platform-independent API for the at least one network service comprises at least one of an impact on the overall complexity/latency for simplifying the API, protocol-level impacts, application requirements for portability, slice related requirements for exposure capabilities, security aspects related to a type of network function, capabilities of an end application, dependencies among services, and a service level agreement ("SLA").

Embodiments may be practiced in other specific forms. The described embodiments are to be considered in all respects only as illustrative and not restrictive. The scope of the invention is, therefore, indicated by the appended claims rather than by the foregoing description.

## Claims

1. An apparatus (700) for wireless communication, comprising:
at least one memory (710); and
at least one processor (705) coupled with at least one memory and configured to cause the apparatus to:
receive (805) a service parameter of at least one network service of a wireless communication system, wherein the wireless communication system comprises one or more platforms; and
determine (810) a platform-independent application programming interface, API, based on the service parameter for the at least one network service of the wireless communication system.

2. The apparatus of claim 1, wherein the at least one processor is further configured to cause the apparatus to publish the platform-independent API to an API invoker for use by end applications across different wireless communication systems.

3. The apparatus of claim 1, wherein the at least one processor is further configured to cause the apparatus to register with the at least one network service for gaining access to invoke the at least one service API.

4. The apparatus of claim 1, wherein the at least one processor is further configured to cause the apparatus to determine the platform-independent API based on a mapping to at least one platform-dependent API.

5. The apparatus of claim 4, wherein the at least one processor is further configured to cause the apparatus to:
detect a trigger event associated with the platform-dependent API; and
update the platform-dependent API in response to the trigger event while ensuring compatibility with the platform-independent API,
optionally wherein the trigger event is selected from the group comprising:
mobility of a user equipment, UE;
relocation of an application server to a different wireless communication system;
unavailability of a service API of the at least one network service of the wireless communication system;
an indication of actual or expected API high load and/or congestion;
relocation of an application client of the UE to a different wireless communication platform;
a network quality of service change indication;
a UE quality of service and/or quality of experience change indication;
a UE context change indication; and
a network unit failure indication.

6. The apparatus of claim 4, wherein the mapping of the at least one service API for the at least one network service to the at least one platform-dependent API is based on determining an availability of the service APIs by at least one of:
receiving a periodic heartbeat message from the at least one network service associated with the at least one service API; and
checking an API enablement service for the at least one network service.

7. The apparatus of claim 4, wherein:
the service parameter of the at least one network service is for a network slice instance, NSI, of a vertical customer of the wireless communication system; and
the platform-dependent API comprises a software development kit API that is customized for the vertical customer.

8. The apparatus of claim 7, wherein the at least one processor is further configured to cause the apparatus to send a request for an availability status of a management API and capabilities related to slice management services for the NSI to a management domain, the request comprising at least one of:
middleware ID;
request of API name;
request of API URI;
request of API version;
request of data format;
request of API supported features related to at least one of a slice and a service;
exposure level requirement for supported features;
API status query;
API termination points; and
time validity of request,
optionally wherein the at least one processor is further configured to cause the apparatus to receive a response message comprising at least one of the following parameters:
MD ID;
MnS ID;
list of API names, types, and data formats;
API supported features related to the at least one of the slice and service;
exposure level of supported features; and
API status report.

9. The apparatus of claim 7, wherein the at least one processor is further configured to cause the apparatus to send a request for an availability status of a control plane API and capabilities related to slice-related control services for the NSI to a control plane, the request comprising at least one of:
middleware ID;
request of Northbound API name;
request of Northbound URI;
request of Northbound API version;
request of data format;
request of Northbound API supported features related to at least one of a slice and a service;
exposure level requirement for supported features;
API status query;
API termination points; and
time validity,
optionally wherein the at least one processor is further configured to cause the apparatus to receive a response message comprising at least one of the following parameters:
NEF ID;
list of API names, types, and data formats;
API supported features related to the at least one of the slice and service;
exposure level of supported features; and
API status report.

10. The apparatus of claim 7, wherein the at least one processor is further configured to cause the apparatus to send a request for an availability status of E2-related function API and capabilities related to slice-related control services for the NSI to an E2-related function, the request comprising at least one of:
one of a middleware ID, an xApp ID, and an rApp ID;
request of E2-related API name;
request of E2-related URI;
request of E2-related version;
request of data format;
request of E2-related supported features related to at least one of a slice and a service;
exposure level requirement for supported features;
E2-related status query;
E2-related termination points; and
time validity,
optionally wherein the at least one processor is further configured to cause the apparatus to receive a response message comprising at least one of the following parameters:
RIC function ID;
list of API names, types, and data formats;
API supported features related to the at least one of the slice and service;
exposure level of supported features; and
API status report.

11. The apparatus of claim 7, wherein the mapping of the at least one service API for the at least one NSI to at least one platform-dependent API is done by matching the service parameter of the at least one network service with at least one capability parameter for the NSI, or the mapping of the platform-dependent API to a platform-independent API for the NSI comprises at least one of a platform-independent API name/identification, enclosed service API names, URIs, API versions, protocol information, termination points per API, API types, communication methods, and time validity.

12. The apparatus of claim 4, wherein the at least one processor is further configured to cause the apparatus to:
request the service parameter from a service management orchestrator, SMO, for the at least one network service, the service parameter based on at least one of a type of the at least one network service and an authorization to access the at least one network service; and
receive a message from the SMO comprising the service parameter for the at least one network service for at least one of a service, a slice, and an application type.

13. The apparatus of claim 4, wherein the mapping of the platform-dependent API to a platform-independent API for the at least one network service comprises at least one of an impact on the overall complexity/latency for simplifying the API, protocol-level impacts, application requirements for portability, slice related requirements for exposure capabilities, security aspects related to a type of network function, capabilities of an end application, dependencies among services, and a service level agreement, SLA.

14. The apparatus of claim 1, wherein the service parameter comprises at least one of an exposure level for the network service, an accessibility of the network service, and an availability of the network service.

15. A method (800) for wireless communication, comprising:
receiving (805) a service parameter of at least one network service of a wireless communication system, wherein the wireless communication system comprises one or more platforms; and
determining (810) a platform-independent application programming interface, API, based on the service parameter for the at least one network service of the wireless communication system.

## Patentansprüche

1. Gerät (700) zur drahtlosen Kommunikation, umfassend:
mindestens einen Speicher (710); und
mindestens einen Prozessor (705), der mit mindestens einem Speicher gekoppelt und dazu konfiguriert ist, zu bewirken, dass das Gerät:
einen Dienstparameter mindestens eines Netzwerkdienstes eines drahtlosen Kommunikationssystems empfängt (805), wobei das drahtlose Kommunikationssystem eine oder mehrere Plattformen umfasst; und
basierend auf dem Dienstparameter für den mindestens einen Netzwerkdienst des drahtlosen Kommunikationssystems eine plattformunabhängigen Anwendungsprogrammierschnittstelle, API, bestimmt (810).

2. Gerät nach Anspruch 1, wobei der mindestens eine Prozessor ferner dazu konfiguriert ist, zu bewirken, dass das Gerät die plattformunabhängige API einem API-Aufrufer zur Verwendung durch Endanwendungen über verschiedene drahtlose Kommunikationssysteme hinweg bekanntgibt.

3. Gerät nach Anspruch 1, wobei der mindestens eine Prozessor ferner dazu konfiguriert ist, zu bewirken, dass sich das Gerät zum Erhalten von Zugang bei dem mindestens einen Netzwerkdienst registriert, um den mindestens einen Dienst-API aufzurufen.

4. Gerät nach Anspruch 1, wobei der mindestens eine Prozessor ferner dazu konfiguriert ist, zu bewirken, dass das Gerät die plattformunabhängige API basierend auf einer Zuordnung zu mindestens einer plattformabhängigen API bestimmt.

5. Gerät nach Anspruch 4, wobei der mindestens eine Prozessor ferner dazu konfiguriert ist, zu bewirken, dass das Gerät:
ein der plattformabhängigen API zugewiesenes Auslöseereignis erkennt; und
die plattformabhängige API als Reaktion auf das Auslöseereignis aktualisiert, während die Kompatibilität mit der plattformunabhängigen API sichergestellt wird,
wobei optional das Auslöseereignis aus der Gruppe ausgewählt ist, die umfasst:
Mobilität eines Benutzergeräts, UE;
Verlagerung eines Anwendungsservers zu einem anderen drahtlosen Kommunikationssystem;
Nichtverfügbarkeit einer Dienst-API des mindestens einen Netzwerkdienstes des drahtlosen Kommunikationssystems;
eine Anzeige einer tatsächlichen oder erwarteten hohen API-Auslastung und/oder Überlastung;
Verlagerung eines Anwendungs-Clients des UE auf eine andere drahtlose Kommunikationsplattform;
eine Anzeige einer Änderung der Netzwerkdienstqualität;
eine Anzeige einer Änderung der UE-Dienstqualität und/oder Änderung der Erlebnisqualität;
eine Anzeige einer UE-Kontextänderung; und
eine Anzeige eines Ausfalls einer Netzwerkeinheit.

6. Gerät nach Anspruch 4, wobei die Zuordnung der mindestens einen Dienst-API für den mindestens einen Netzwerkdienst zu der mindestens einen plattformabhängigen API auf dem Bestimmen einer Verfügbarkeit der Dienst-APls durch mindestens eines des Folgenden basiert:
Empfangen einer periodischen Heartbeat-Nachricht von dem mindestens einen Netzwerkdienst, der der mindestens einen Dienst-API zugewiesen ist; und
Überprüfen eines API-Aktivierungsdienstes für den mindestens einen Netzwerkdienst.

7. Gerät nach Anspruch 4, wobei:
der Dienstparameter des mindestens einen Netzwerkdienstes für eine Netzwerk-Slice-Instanz, NSI, eines vertikalen Kunden des drahtlosen Kommunikationssystems bestimmt ist; und
die plattformabhängige API eine Softwareentwicklungskit-API umfasst, die für den vertikalen Kunden angepasst ist.

8. Gerät nach Anspruch 7, wobei der mindestens eine Prozessor ferner dazu konfiguriert ist, zu bewirken, dass das Gerät eine Anfrage nach einem Verfügbarkeitsstatus einer Verwaltungs-API und Fähigkeiten in Bezug auf Slice-Verwaltungsdienste für die NSI an eine Verwaltungsdomäne sendet, wobei die Anfrage mindestens eines umfasst von:
Middleware-ID;
Anfrage nach dem API-Namen;
Anfrage nach der API-URI;
Anfrage nach der API-Version;
Anfrage nach dem Datenformat;
Anfrage nach APl-unterstützten Merkmalen in Bezug auf mindestens einem von einem Slice und einem Dienst;
Anforderung für das Expositionsniveau für unterstützte Merkmale;
API-Statusabfrage;
API-Abschlusspunkte; und
Zeitgültigkeit der Anfrage,
wobei optional der mindestens eine Prozessor ferner dazu konfiguriert ist, zu bewirken, dass das Gerät eine Antwortnachricht empfängt, die mindestens einen der folgenden Parameter umfasst:
MD-ID;
MnS-ID;
Liste von API-Namen, -Typen und -Datenformaten;
API-unterstützte Merkmale in Bezug auf dem mindestens einen von dem Slice und dem Dienst;
Expositionsniveau von unterstützten Merkmalen; und
API-Statusbericht.

9. Gerät nach Anspruch 7, wobei der mindestens eine Prozessor ferner dazu konfiguriert ist, zu bewirken, dass das Gerät eine Anfrage nach einem Verfügbarkeitsstatus einer Steuerungsebenen-API und Fähigkeiten in Bezug auf slicebezogene Steuerungsdienste für die NSI an eine Steuerungsebene sendet, wobei die Anfrage mindestens eines umfasst von:
Middleware-ID;
Anfrage nach dem Namen der Northbound-API;
Anfrage nach der Northbound-URI;
Anfrage nach der Northbound-API-Version;
Anfrage nach dem Datenformat;
Anfrage nach den von der Northbound-API unterstützten Merkmalen in Bezug auf mindestens ein Slice und einen Dienst;
Anforderung für das Expositionsniveau für unterstützte Merkmale;
API-Statusabfrage;
API-Abschlusspunkte; und
Zeitgültigkeit,
wobei optional der mindestens eine Prozessor ferner dazu konfiguriert ist, zu bewirken, dass das Gerät eine Antwortnachricht empfängt, die mindestens einen der folgenden Parameter umfasst:
NEF-ID;
Liste von API-Namen, -Typen und -Datenformaten;
APl-unterstützte Merkmale in Bezug auf mindestens einem von dem Slice und dem Dienst;
Expositionsniveau von unterstützten Merkmalen; und
API-Statusbericht.

10. Gerät nach Anspruch 7, wobei der mindestens eine Prozessor ferner dazu konfiguriert ist, zu bewirken, dass das Gerät eine Anfrage nach einem Verfügbarkeitsstatus der E2-bezogenen Funktions-API und den Fähigkeiten in Bezug auf slicebezogene Steuerungsdienste für die NSI an eine E2-bezogene Funktion sendet, wobei die Anfrage mindestens eines umfasst von:
eine von einer Middleware-ID, einer xApp-ID und einer rApp-ID;
Anfrage nach dem E2-bezogenen API-Namen;
Anfrage nach der E2-bezogenen URI;
Anfrage nach der E2-bezogenen Version;
Anfrage nach dem Datenformats;
Anfrage nach E2-bezogenen unterstützten Merkmalen in Bezug auf mindestens einem von einem Slice und einem Dienst;
Anforderung an das Expositionsniveau für unterstützte Merkmale;
E2-bezogene Statusabfrage;
E2-bezogene Abschlusspunkte; und
Zeitgültigkeit,
wobei optional der mindestens eine Prozessor ferner dazu konfiguriert ist, zu bewirken, dass das Gerät eine Antwortnachricht empfängt, die mindestens einen der folgenden Parameter umfasst:
RIC-Funktions-ID;
Liste von API-Namen, -Typen und -Datenformaten;
API-unterstützte Merkmale in Bezug auf dem mindestens einen von dem Slice und dem Dienst;
Expositionsniveau von unterstützten Merkmalen; und
API-Statusbericht.

11. Gerät nach Anspruch 7, wobei die Zuordnung der mindestens einen Dienst-API für die mindestens eine NSI zu mindestens einer plattformabhängigen API durch Abgleichen des Dienstparameters des mindestens einen Netzwerkdienstes mit mindestens einem Fähigkeitsparameter für die NSI erfolgt oder die Zuordnung der plattformabhängigen API zu einer plattformunabhängigen API für die NSI mindestens eines von einem plattformunabhängigen API-Namen/einer plattformunabhängigen API-Identifikation, beigefügten Dienst-API-Namen, URIs, API-Versionen, Protokollinformationen, Abschlusspunkten pro API, API-Typen, Kommunikationsverfahren und der Zeitgültigkeit umfasst.

12. Gerät nach Anspruch 4, wobei der mindestens eine Prozessor ferner dazu konfiguriert ist, zu bewirken, dass das Gerät:
den Dienstparameter bei einem Dienstverwaltungs-Orchestrator (SMO) für den mindestens einen Netzwerkdienst anfragt, wobei der Dienstparameter auf mindestens einem von einem Typ des mindestens einen Netzwerkdienstes und einer Berechtigung zum Zugriff auf den mindestens einen Netzwerkdienst basiert; und
eine Nachricht von dem SMO empfängt, die den Dienstparameter für den mindestens einen Netzwerkdienst für mindestens einem von einem Dienst, einem Slice und einem Anwendungstyp umfasst.

13. Gerät nach Anspruch 4, wobei die Zuordnung der plattformabhängigen API zu einer plattformunabhängigen API für den mindestens einen Netzwerkdienst mindestens eines von einer Auswirkung auf die Gesamtkomplexität/Latenz zur Vereinfachung der API, Auswirkungen auf Protokollebene, Anwendungsanforderungen für die Portabilität, slicebezogenen Anforderungen an Expositionsfähigkeiten, Sicherheitsaspekten in Bezug auf einen Typ einer Netzwerkfunktion, Fähigkeiten einer Endanwendung, Abhängigkeiten zwischen Diensten und einer Dienstleistungsvereinbarung (SLA) umfasst.

14. Gerät nach Anspruch 1, wobei der Dienstparameter mindestens eines von einem Expositionsniveau für den Netzwerkdienst, einer Zugänglichkeit des Netzwerkdienstes und einer Verfügbarkeit des Netzwerkdienstes umfasst.

15. Verfahren (800) zur drahtlosen Kommunikation, umfassend:
Empfangen (805) eines Dienstparameters mindestens eines Netzwerkdienstes eines drahtlosen Kommunikationssystems, wobei das drahtlose Kommunikationssystem eine oder mehrere Plattformen umfasst; und
Bestimmen (810), basierend auf dem Dienstparameter für den mindestens einen Netzwerkdienst des drahtlosen Kommunikationssystems, einer plattformunabhängigen Anwendungsprogrammierschnittstelle (API).

## Revendications

1. Appareil (700) de communication sans fil, comprenant :
au moins une mémoire (710) ; et
au moins un processeur (705) couplé à l'au moins une mémoire et configuré pour amener l'appareil à :
recevoir (805) un paramètre de service d'au moins un service de réseau d'un système de communication sans fil, dans lequel le système de communication sans fil comprend une ou plusieurs plateformes ; et
déterminer (810) une interface de programmation d'application, API, indépendante de la plateforme, sur la base du paramètre de service pour l'au moins un service de réseau du système de communication sans fil.

2. Appareil de la revendication 1, dans lequel l'au moins un processeur est en outre configuré pour amener l'appareil à publier l'API indépendante de la plateforme à un module d'invocation d'API en vue de son utilisation par des applications d'extrémité sur différents systèmes de communication sans fil.

3. Appareil de la revendication 1, dans lequel l'au moins un processeur est en outre configuré pour amener l'appareil à s'enregistrer auprès de l'au moins un service de réseau afin d'obtenir l'accès pour invoquer au moins une API de service.

4. Appareil de la revendication 1, dans lequel l'au moins un processeur est en outre configuré pour amener l'appareil à déterminer l'API indépendante de la plateforme sur la base d'une mise en correspondance avec au moins une API dépendante de la plateforme.

5. Appareil de la revendication 4, dans lequel l'au moins un processeur est en outre configuré pour amener l'appareil à :
détecter un événement déclencheur associé à l'API dépendante de la plateforme ; et
mettre à jour l'API dépendante de la plateforme en réponse à l'événement déclencheur tout en assurant la compatibilité avec l'API indépendante de la plateforme,
éventuellement dans lequel l'événement déclencheur est choisi dans le groupe comprenant :
la mobilité d'un équipement utilisateur, UE ;
la relocalisation d'un serveur d'application vers un système de communication sans fil différent;
l'indisponibilité d'une API de service de l'au moins un service de réseau du système de communication sans fil ;
une indication d'une charge élevée et/ou d'un encombrement d'API réel(s) ou prévu(s) ;
la relocalisation d'un dispositif client d'application de l'UE vers une plateforme de communication sans fil différente ;
une indication de changement de qualité de service de réseau ;
une indication de changement de qualité de service et/ou de qualité d'expérience d'UE ;
une indication de changement de contexte d'UE ; et
une indication de défaillance d'unité de réseau.

6. Appareil de la revendication 4, dans lequel la mise en correspondance de l'au moins une API de service pour l'au moins un service de réseau avec l'au moins une API dépendante de la plateforme est basée sur la détermination d'une disponibilité des API de service par au moins l'une parmi :
la réception d'un message de battement de coeur périodique provenant de l'au moins un service de réseau associé à l'au moins une API de service ; et
la vérification d'un service d'activation d'API pour l'au moins un service de réseau.

7. Appareil de la revendication 4, dans lequel :
le paramètre de service de l'au moins un service de réseau concerne une instance de tranche de réseau, NSI, d'un client vertical du système de communication sans fil ; et
l'API dépendante de la plateforme comprend une API de kit de développement logiciel qui est personnalisée pour le client vertical.

8. Appareil de la revendication 7, dans lequel l'au moins un processeur est en outre configuré pour amener l'appareil à envoyer une demande concernant un état de disponibilité d'une API de gestion et des capacités liées à des services de gestion de tranches pour la NSI à un domaine de gestion, la demande comprenant au moins l'un des éléments parmi :
un ID de logiciel médiateur;
une demande de nom d'API ;
une demande d'URI d'API ;
une demande de version d'API ;
une demande de format de données ;
une demande de fonctionnalités prises en charge par l'API, liées à au moins l'un(e) parmi une tranche et un service ;
une exigence de niveau d'exposition pour des fonctionnalités prises en charge ;
une interrogation d'état d'API ;
des points de terminaison d'API ; et
une validité temporelle de demande,
éventuellement dans lequel l'au moins un processeur est en outre configuré pour amener l'appareil à recevoir un message de réponse comprenant au moins l'un des paramètres suivants :
ID de MD ;
ID de MnS ;
liste de noms, types et formats de données d'API ;
fonctionnalités prises en charge par l'API, liées à l'au moins un(e) parmi la tranche et le service ;
un niveau d'exposition de fonctionnalités prises en charge ; et
un rapport d'état d'API.

9. Appareil de la revendication 7, dans lequel l'au moins un processeur est en outre configuré pour amener l'appareil à envoyer, à un plan de commande, une demande concernant un état de disponibilité d'une API de plan de commande et des capacités liées à des services de commande liés aux tranches pour la NSI, la demande comprenant au moins l'un des éléments parmi :
un ID de logiciel médiateur;
une demande de nom d'API orientée vers le haut ;
une demande d'URI orientée vers le haut;
une demande de version d'API orientée vers le haut ;
une demande de format de données ;
une demande de fonctionnalités prises en charge par l'API orientée vers le haut, liées au moins l'un(e) parmi une tranche et un service ;
une exigence de niveau d'exposition pour les fonctionnalités prises en charge ;
une interrogation d'état d'API ;
des points de terminaison d'API ; et
une validité temporelle,
éventuellement dans lequel l'au moins un processeur est en outre configuré pour amener l'appareil à recevoir un message de réponse comprenant au moins l'un des paramètres suivants :
ID de NEF ;
liste de noms, types et formats de données d'API ;
fonctionnalités prises en charge par l'API, liées à l'au moins un(e) parmi la tranche et le service ;
niveau d'exposition de fonctionnalités prises en charge ; et
rapport d'état d'API.

10. Appareil de la revendication 7, dans lequel l'au moins un processeur est en outre configuré pour amener l'appareil à envoyer, à une fonction liée à l'interface E2, une demande concernant un état de disponibilité d'une API de fonction liée à l'interface E2, et des capacités liées à des services de commande liés aux tranches pour la NSI, la demande comprenant au moins l'un des éléments parmi :
un ID de logiciel médiateur, un ID de xApp et un ID de rApp ;
une demande de nom d'API lié à l'interface E2 ;
une demande d'URI liée à l'interface E2 ;
une demande de version liée à l'interface E2 ;
une demande de format de données ;
une demande de fonctionnalités prises en charge liées à l'interface E2, connexes au moins l'un(e) parmi une tranche et un service ;
une exigence de niveau d'exposition pour des fonctionnalités prises en charge ;
une interrogation d'état lié à l'interface E2 ;
des points de terminaison liés à l'interface E2 ; et
une validité temporelle,
éventuellement dans lequel l'au moins un processeur est en outre configuré pour amener l'appareil à recevoir un message de réponse comprenant au moins l'un des paramètres suivants :
ID de fonction RIC ;
liste de noms, types et formats de données d'API ;
fonctionnalités prises en charge par l'API, liées à l'au moins un(e) parmi la tranche et le service ;
niveau d'exposition de fonctionnalités prises en charge ; et
rapport d'état d'API.

11. Appareil de la revendication 7, dans lequel la mise en correspondance de l'au moins une API de service pour l'au moins une NSI avec au moins une API dépendante de la plateforme est effectuée en faisant correspondre le paramètre de service de l'au moins un service de réseau avec au moins un paramètre de capacité pour la NSI, ou la mise en correspondance de l'API dépendante de la plateforme avec une API indépendante de la plateforme pour la NSI comprend au moins l'un des éléments parmi un nom / une identification d'API indépendante de la plateforme, des noms d'API de service inclus, des URI, des versions d'API, des informations de protocole, des points de terminaison par API, des types d'API, des procédés de communication, et une validité temporelle.

12. Appareil de la revendication 4, dans lequel l'au moins un processeur est en outre configuré pour amener l'appareil à :
demander le paramètre de service à un orchestrateur de gestion de services, SMO, pour l'au moins un service de réseau, le paramètre de service étant basé sur au moins l'un(e) parmi un type de l'au moins un service de réseau et une autorisation d'accès à l'au moins un service de réseau ; et
recevoir un message provenant du SMO comprenant le paramètre de service pour l'au moins un service de réseau pour au moins l'un(e) parmi un service, une tranche et un type d'application.

13. Appareil de la revendication 4, dans lequel la mise en correspondance de l'API dépendante de la plateforme avec une API indépendante de la plateforme pour l'au moins un service de réseau comprend au moins l'un des éléments parmi un impact sur la complexité/latence globale pour simplifier l'API, des impacts de niveau de protocole, des exigences d'application pour la portabilité, des exigences liées aux tranches pour des capacités d'exposition, des aspects de sécurité liés à un type de fonction de réseau, des capacités d'une application d'extrémité, des dépendances entre les services, et un accord de niveau de service (SLA).

14. Appareil de la revendication 1, dans lequel le paramètre de service comprend au moins l'un(e) parmi un niveau d'exposition pour le service de réseau, une accessibilité du service de réseau et une disponibilité du service de réseau.

15. Procédé (800) de communication sans fil, comprenant :
la réception (805) d'un paramètre de service d'au moins un service de réseau d'un système de communication sans fil, dans lequel le système de communication sans fil comprend une ou plusieurs plateformes ; et
la détermination (810) d'une interface de programmation d'application, API, indépendante de la plateforme, sur la base du paramètre de service pour l'au moins un service de réseau du système de communication sans fil.
